(19) Europäisches Patentamt
European Patent Office
Office européen des brevets

(11) EP 0 435 208 B1

## (12) EUROPEAN PATENT SPECIFICATION

(45) Date of publication and mention
of the grant of the patent:
**20.03.1996 Bulletin 1996/12**

(51) Int Cl.6: **G06F 15/80**

(21) Application number: **90125141.3**

(22) Date of filing: **21.12.1990**

### (54) **Neuro-computer**

Neurorechner

Ordinateur neuronal

(84) Designated Contracting States:
**DE FR GB**

(30) Priority: **22.12.1989 JP 333895/89**

(43) Date of publication of application:
**03.07.1991 Bulletin 1991/27**

(73) Proprietor: **SHARP KABUSHIKI KAISHA**
**Osaka 545 (JP)**

(72) Inventor: **Fujimoto, Yoshiji**
**Nara-shi, Nara-ken (JP)**

(74) Representative:
**TER MEER - MÜLLER - STEINMEISTER &**
**PARTNER**
**Mauerkircherstrasse 45**
**D-81679 München (DE)**

(56) References cited:
**US-A- 4 065 808**

- **THE COMPUTER JOURNAL. vol. 30, no. 5, October 1987, LONDON GB pages 413 - 419; FORREST: 'Implementing neural network models on parallel computers'**
- **IJCNN INTERNATIONAL JOINT CONFERENCE ON NEURAL NETWORKS, vol. 2, 17 June 1990, SAN DIEGO,USA pages 581 - 586; FUJIMOTO: 'An enhanced parallel planar lattice architecture for large scale neural network simulations'**
- **IJCNN INTERNATIONAL JOINT CONFERENCE ON NEURAL NETWORKS vol. 2, 19 June 1989, WASHINGTON,USA page 614; FUJIMOTO: 'An enhanced parallel toroidal lattice architecture for large scale neural networks'**
- **IJCNN INTERNATIONAL JOINT CONFERENCE ON NEURAL NETWORKS vol. 2, 19 June 1989, WASHINGTON,USA pages 155 - 161; WATANABE: 'Neural network simulation on a massively parallel cellular array processor : AAP-2'**
- **IEEE TRANSACTIONS ON COMPUTERS. vol. 38, no. 9, September 1989, NEW YORK US pages 1345 - 1351; HUNGWEN LI: 'Polymorphic-torus network'**

**Description**

BACKGROUND OF THE INVENTION

1. Field of the Invention

The present invention relates to a neuro-computer for simulating a large neural network structured with a neuron model by using a large number of processors.

2. Description of the Related Art

The inventor of the present invention knows that a large scale neural network is simulated with respect to a neural network structured with one of many neuron models which have been proposed thus far and each neuro circuit element model is simulated by a general purpose computer which is capable of performing a parallel computation process.

In the large scale neural network, a large number of neurons are mutually connected, so that in the case where the network is simulated by using a large number of processors, a mesh type (lattice type) connection, a crossbar connection, a tree type connection, a multiple cross type connection, and a cube type connection have been proposed as the connection methods for connecting a large number of processors.

For the simulations of the neuron models, the tree type connection, the multiple crossbar type connection, and the cube type connection are available. However, in these connection methods, as the number of processors increases, the number of switching circuits are proportionally increased. Thus, the capacity of the transmission line becomes short or the number of intersections of the wires is increased, thereby complicating the installation of the wires. However, such a problem has been solved by a lattice shaped torus connection (Japanese Patent Application No. SHO 63-330971) and a lattice shaped rectangular planar connection (Japanese Patent Application No. HEI 1-24307). Such connection methods have proposed as the parallel processing methods for simulating the large neural networks structured with the neuron models represented by the following equations (1) and (2).

$$y_j = \sum_{i=1} w_{ij}x_i \qquad \text{......... (1)}$$

$$z_j = F(y_j) \qquad (2)$$

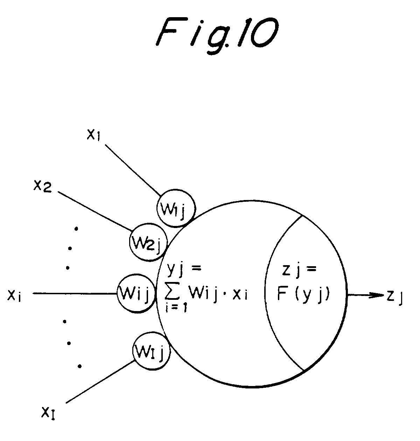

In the parallel neuro-computer using the above-mentioned lattice shaped torus connection and the lattice shaped rectangular planar connection, a neuron model shown in Fig. 10 has been simulated.

The above-mentioned neuron model contains many types of the neuron models represented by the equations (1) and (2). However, there are neuron models having self-learning function without a teacher, and not being expressed only by the equations (1) and (2).

In the known neuro-computers using the lattice shaped torus connection and the lattice shaped rectangular planar connection, there is no efficient neuro-computer which has been proposed for simulating the neuron models having self-learning function without a teacher.

Document THE COMPUTER JOURNAL, vol. 30. no.5, October 1987, LONDON, GB, pages 413 - 419 ; FORREST : 'Implementing neural network models on parallel computers' discloses simulating of a large neural network by means of two basic parallel processor architectures SIMD (Single Iustruction Multiple Data) and MIMD (Multiple Instruction Multiple Data) whose performance is derived from having large numbers of processors operating on the same task. Said processors being all of the same type. Document US-A-4 065 808 discloses a network computer system in which the individual processors are arranged in the form of a matrix, with each processor connected with its directly neighboring processors. The individual processors are checker-board-like assigned to one of two groups, and each group is connected, by its own instruction line to a control unit for connection to the control computer.

SUMMARY OF THE INVENTION

It is therefore an object of the present invention to provide an efficient method for simulating a neuron model having self learning function without a teacher in a neuro-computer in the lattice shaped torus connection and the lattice shaped rectangular planar connection.

An object of the present invention can be achieved by a neuro-computer as set out in claim 1.

Preferably, the plurality of basic processors are connected in a lattice shaped torus connection formed in a counter propagation network system.

More preferably, the first type of the basic processors include at least one of an input processor, an output processor or an input/output-processor, and the second type of the basic processors include at least one of a weighting processor or a cell processor.

Further preferably, the weighting processor or the cell processor is connected with a different weighting processor or a different cell processor located vertically or horizontally in the lattice shape for transmitting signals, and a rightmost weighting processor is connected with a leftmost weighting processor through the connection unit for transmitting signals, respectively.

A lowermost weighting processor and a lowermost cell processor are preferably connected with the input processor, the output processor or the input/output processor through the connection unit for transmitting signals.

Furthermore, the connection unit are signal lines preferably, and the input processor, the output processor and the input/output processor are connected with the external device through the signal lines for receiving the input data from the external device, respectively.

The basic processors are virtual processors which include weighting processors, cell processors, input processors, output processors, and input/output processors, and the virtual processors being grouped, preferably.

Preferably, the virtual processors are disposed in the lattice shape having P portions in a vertical direction and Q portions in a horizontal direction so as to form an array of the physical processors in a lattice shape of the P rows by the Q columns with the P portions and the Q portions satisfying a relation of $P < N + m + n + 1$ and $Q < N + 2m + 2n$, respectively.

More preferably, the physical processor is connected with two adjacent physical processors at the same row thereof and also connected with two adjacent physical processors at the same column thereof in the lattice shape, and the lattice shape being a lattice shaped torus connection.

More preferably, the physical processors disposed at rightmost positions are connected with the physical processors disposed at leftmost positions at the same row thereof through signal lines respectively.

The physical processors disposed at lowermost positions are preferably connected with the physical processors disposed at uppermost positions at the same column thereof through signal lines respectively.

The external device is preferably a host computer, and the physical processors disposed at the uppermost positions are also connected with the host computer through signal lines so as to provide I/O functions to the physical processors disposed at the uppermost positions.

Preferably, at least one of the physical processors in each column is provided with I/O functions.

The physical processors provided with the I/O functions are assigned to a computation function and a storage function of at least one of the input processors, the output processors, the input/output processors, the weighting processors or the cell processors included in each of the assigned rectangular areas, preferably.

The physical processors other than the physical processors provided with the I/O functions are assigned to the computation function and the storage function for the weighting processors and for the cell processors in the assigned rectangular area, preferably.

Preferably, the physical processors are node processors, and each of the node processors is positioned at an intersection of the lattice.

More preferably, the node processors are microprocessors having a high speed product-sum computation function and provided with a data memory capable of storing a weighting coefficient of the weighting processor.

The data memory is also capable of storing an output value of the cell processor, an intermediate value of a learning process and I/O functions for connecting the microprocessors in four directions therefrom, preferably.

According to the neuro-computer of the present invention, the basic processors have two types, one of which compares an output value sent from an adjacent basic processor with that sent from another adjacent basic processor and sends the larger or smaller value as a maximum or minimum value to another adjacent basic processor other that which outputs the output value, other of which compares a maximum or minimum value sent from an adjacent basic processor with an output value sent from another adjacent basic processor and outputs a particular value to another adjacent basic processor other than that which outputs the maximum or minimum value or the output value in accordance with the compared result.

The present invention may be the neuro-computer where all the basic processors are divided into a plurality of rectangular areas, at least one physical processor being disposed at each divided rectangular area, the physical processors being connected to two adjacent physical processors at the same line thereof and to two adjacent physical processors at the same row thereof, the physical processor having all functions of a plurality of basic processors in the rectangular area thereof.

Further objects and advantages of the present invention will be apparent from the following description of the preferred embodiments of the invention as illustrated in the accompanying drawings.

BRIEF DESCRIPTION OF THE DRAWINGS

Fig. 1 shows a lattice shaped torus connection having weighting processors, cell processors, input processors, output processors, and input/output processors schematically;

Fig. 2 shows the structure of a Kohonen's self organization model;

Fig. 3 illustrates a diagram showing the structure of counter propagation network (CPN);

Fig. 4 illustrates a flow chart showing the process of a simulation of CPN;

Fig. 5 illustrates a flow chart showing the process method of a maximum value detection process;

Fig. 6 shows a division for mapping virtual processors in lattice shaped torus connection to physical processors schematically;

Fig. 7 shows the structure of a neuro-computer system having node processors in the lattice shaped torus connection and the virtual internal structure of each node processor schematically;

Fig. 8 illustrates the tables showing how unbalanced load is solved by replacing lines with columns or vice versa;

Fig. 9 shows an array of weighting processors and node processors in accordance with CPN schematically; and

Fig. 10 shows a neuron model schematically.

## DESCRIPTION OF THE PREFERRED EMBODIMENTS

An embodiment of a neuro-computer according to the present invention will be described with referring to the accompanying drawings.

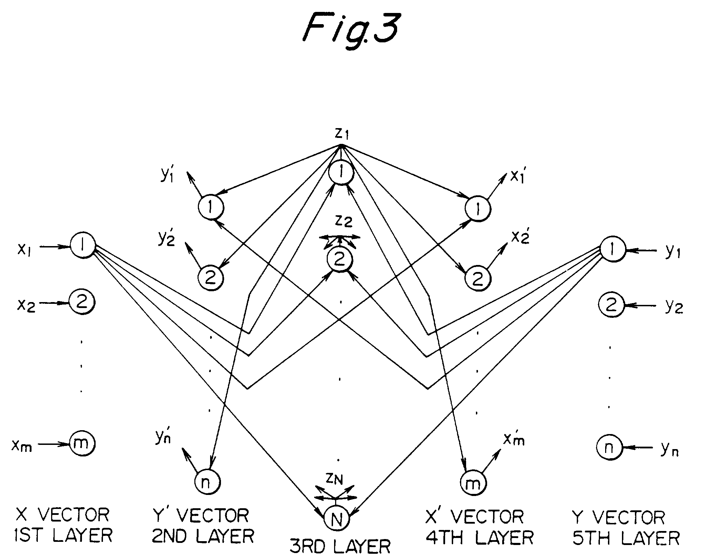

Fig. 3 shows the structure of a counter propagation network (hereinafter named CPN) having a self-learning function and composed of five layers.

In a simulation of CPN, the 1st and 5th layers are input layers, the 3rd layer is an intermediate layer for performing Kohonen's self-organization process, the 2nd and 4th layers are those for performing Grossberg's learning process. A model of the Kohonen's self-organization model and a CPN model will be described in the following.

[Kohonen's self-organization model]

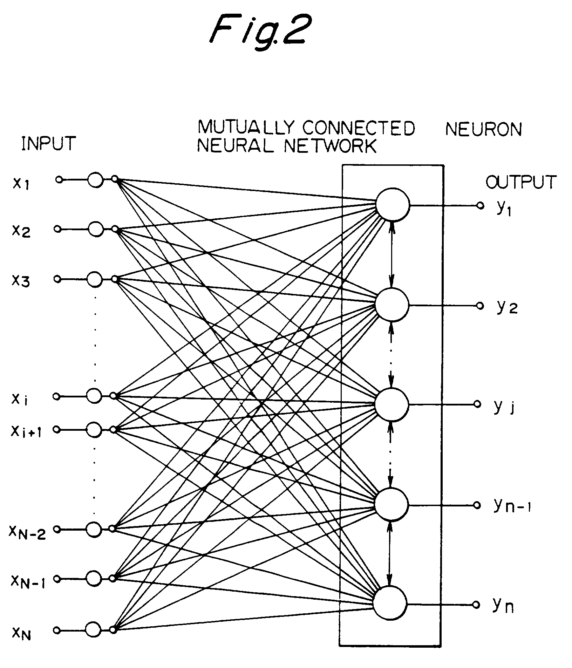

The Kohonen's self-organization network is shown in Fig. 2. When it is assumed that an input signal is $x = [x_1, x_2, ..., x_n]$ and a weighting coefficient is $w_1 = [w_{i1}, w_{i2}, ..., w_{in}]$, the function can be represented by the following equations.

At first, the output of each unit is represented by the following equation (3).

$$y_i = \sum_{j=1}^{N} w_{ij} \cdot x_j = w_i \cdot x^T \qquad \cdots\cdots (3)$$

A learning is performed in a unit $k^0$ with the maximum output value in a set of units $S = (1, 2, ........., s)$ and in surrounding unit $i \in \Gamma (k^0)$ by the following equations (4) and (5).

$$k^0 = (k \mid y_k = \max \{y_i\})$$

$$i \in S \qquad (4)$$

$$w_i (t+1) = \frac{w_i (t) + \alpha x (t)}{\| w_i (t) + \alpha x (t) \|} \qquad (5)$$

[where $i \in \Gamma (k^0)$]

[Hecht-Nielsen's CPN model]

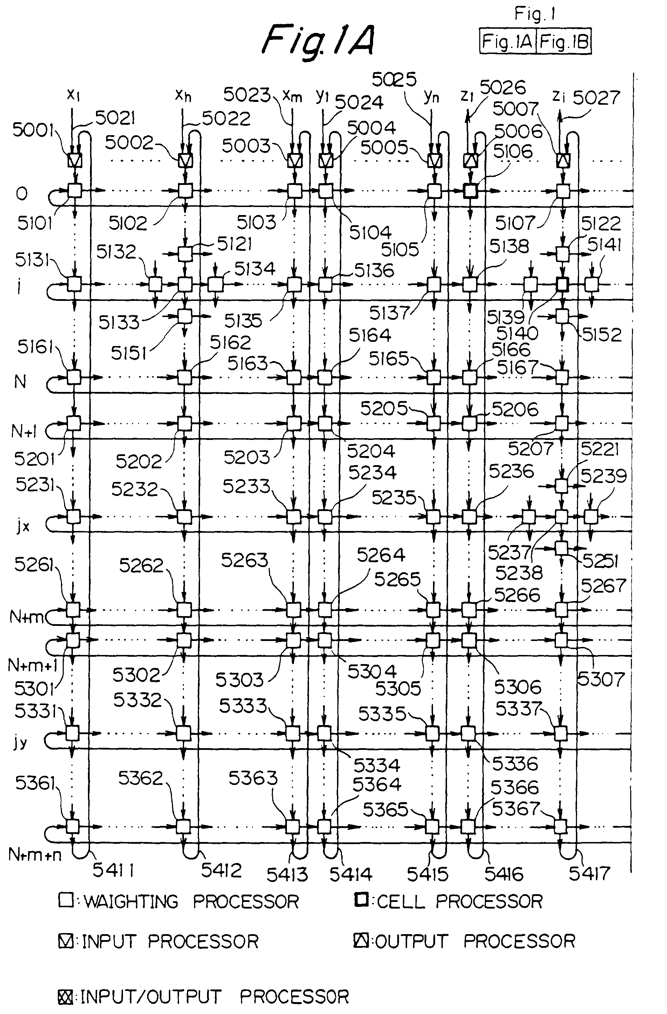

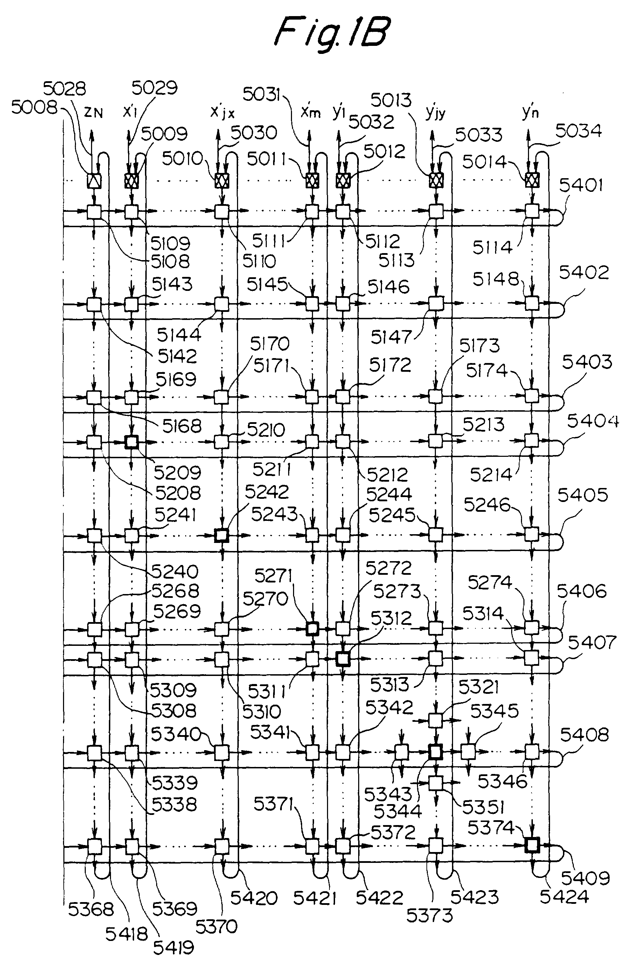

A CPN model has a five-layered network as shown in Fig. 1. When it is assumed that input vectors are $x = (x_1, x_2, ..., x_n)$ and $y = (y_1, y_2, ..., y_m)$, a pair of vectors $(x, y)$ are given to the 1st and 5th layers. From the 2nd and 4th layers, vectors $x' = (x'_1, x'_2, ..., x'_n)$ and $y' = (y'_1, y'_2, ..., y'_m)$ are output as approximations of vectors $(x, y)$. When the output from the 3rd layer is expressed as $z = (z_1, z_2, ..., z_n)$, the propagation function and learning rule of the CPN model can be represented by the following equations.

1st and 5th layers: Input layers

2nd and 4th layers:

$$y'_i = \sum_{j=1}^{N} w^y_{ij} z_j \qquad \cdots\cdots (6)$$

$$\Delta w^y_{ij} = (-a w^y_{ij} + b y_j) z_j \qquad (7)$$

$$x'_i = \sum_{j=1}^{N} w^x{}_{ij}z_j \qquad \text{.........} \quad (8)$$

$$\Delta w^x{}_{ij} = (-cw^x{}_{ij} + dx_j)z_j \qquad (9)$$

3rd layer:

$$\omega_i = \sum_{j=1}^{m} u_{ij}x_j + \sum_{j=1}^{n} v_{ij}y_j$$

$$= u_i \cdot x + v_i \cdot y \qquad \text{.........} \quad (10)$$

$$z_i = \begin{cases} 1 & \text{if } \omega_i > \omega_j \quad \text{for all } j \in S \\ 0 & \text{otherwise} \end{cases} \qquad \text{.........} \quad (11)$$

$$\Delta u_i = \alpha(x - u_i)z_i \qquad (12)$$

$$\Delta v_i = \beta(y - v_i)z_i \qquad (13)$$

where a, b, c, d, ($\alpha$), and ($\beta$) are constants and S is a set of units of the 3rd layer S = (1, 2, ..., N).

In the above-mentioned two models, function ($\Phi$) ($\omega_j$, S) defined by the following equation for detecting the maximum value is used.

$$\Phi(\omega_j, S) = \begin{cases} 1 & \text{if } \omega_j = \max_{k \in S} (\omega_k) \\ 0 & \text{otherwise} \end{cases} \qquad \text{.........} \quad (14)$$

By using the maximum value detection ($\Phi$) ($\omega_j$, S), the equation (4) with respect to the Kohonen's self-organization model and the equation (11) with respect to the CPN model can be transformed into the equations (15) and (16), respectively.

$$k^0 = \{k \mid \Phi(\omega_k, S) = 1\} \qquad (15)$$

$$z_i = \Phi(\omega_i, S) \qquad (16)$$

By effectively processing the maximum value detection function $\Phi(\omega_j, S)$ represented by the equation (14) by means of the parallel processors in the lattice shaped torus connection and the lattice shaped rectangular planar connection, various neuron models such as the Kohonen's self-organization model, Hecht-Nielsen's CPN model, Grossberg's ART (adaptive resonance theory) model, and so forth can be simulated.

Fig. 1 shows a CPN parallel process system having the basic processors which are connected in lattice shaped torus connection. One type of the basic processors are the input processors, the output processors, and the input/output processors connected to an external unit. Another types of basic processors are weighting processors and cell processors which are not connected to the external unit.

Assuming that the dimension of the input vector x of a neural network and the dimension of the output vector x' thereof are respective m, the dimension of the input vector y and the dimension of the output vector y' are respective n, and the dimension of the neurons on the 3rd layer is N, the processors are disposed at (N + m + n + 1) rows and at (2m + 2n + N) columns in a lattice shape.

At the 0th row and at the 1st to (m + n)th columns, (m + n) input processors are disposed. At the 0th row and at the (m + n + 1)th column to (m + n + N)th column, N output processors are disposed. At the 0th row and at the (m + n + N + 1)th column to the (2m + 2n + N)th column, (m + n) input/output processors are disposed. At each row of the 1st row to the (N + m + n)th row, (2m + 2n + N - 1) weighting processors are disposed. At each column of diagonal from the 1st row and the (n + m + 1)th column to the (N + m + n)th row and the (2m + 2n + N)th column, one cell processor is disposed respectively.

The dispositions of processors on each layer will be described in the following.

1st layer [1st column to m-th column]

At the 0th row, input processors 5001 to 5003 are disposed. At the 1st row, weighting processors 5101 to 5103 are disposed. At the i-th row, weighting processors 5131 to 5135 are disposed. At the N-th row, weighting processors 5161 to 5163 are disposed. At the $(N + 1)$th row, weighting processors 5201 to 5203 are disposed. At the $j_x$-th row, weighting processors 5231 to 5233 are disposed. At the $(N + m)$th row, weighting processors 5261 to 5263 are disposed. At the $(N + m + 1)$th row, weighting processors 5301 to 5303 are disposed. At the $j_y$-th row, weighting processors 5331 to 5333 are disposed. At the $(N + m + n)$th row, weighting processors 5361 to 5363 are disposed.

5th layer [from $(m + 1)$th column to $(m + n)$th column]

At the 0th row, input processors 5004 to 5005 are disposed. At the 1st row, weighting processors 5104 to 5105 are disposed. At the i-th row, weighting processors 5136 to 5137 are disposed. At the N-th row, weighting processors 5164 to 5165 are disposed. At the $(N + 1)$th row, weighting processors 5204 to 5205 are disposed. At the $j_x$-th row, weighting processors 5234 to 5235 are disposed. At the $(N + m)$th row, weighting processors 5264 to 5265 are disposed. At the $(N + m + 1)$th row, weighting processors 5304 to 5305 are disposed. At the $j_y$-th row, weighting processors 5334 to 5335 are disposed. At the $(N + m + n)$th row, weighting processors 5364 and 5365 are disposed.

3rd layer [from $(m + n + 1)$th column to $(m + n + N)$th column]

At the 0th row, output processors 5006 to 5008 are disposed. At the 1st row and at the $(m + n + 1)$th column, a cell processor 5106 is disposed. At the 1st row and at any other columns, weighting processors 5107 to 5108 are disposed. At the i-th row and at the $(m + n + 1)$th column, a cell processor 5140 is disposed. At the i-th row and at any other column, weighting processors 5138, 5139, 5141, and 5142 are disposed. At the N-th row and at the $(m + n + N)$th column, a cell processor 5168 is disposed. At the N-th row and at any other columns, weighting processors 5166 to 5167 are disposed. At the $(N + 1)$th row, weighting processors 5206 to 5208 are disposed. At the $j_x$-th row, weighting processors 5236 to 5240 are disposed. At the $(N + m)$th row, weighting processors 5266 to 5268 are disposed. At the $(N + m + 1)$th row, weighting processors 5306 to 5308 are disposed. At the jy-th row, weighting processors 5336 to 5338 are disposed. At the $(N + m + n)$th row, weighting processors 5366 to 5368 are disposed. At the $(N + m + n)$th row, weighting processors 5366 to 5368 are disposed.

4th layer [from $(m + n + N + 1)$th column to $(2m + n + N)$th column]

At the 0th row, input/output processors 5009 to 5011 are disposed. At the 1st row, weighting processors 5109 to 5111 are disposed. At the i-th row, weighting processors 5143 to 5145 are disposed. At the N-th row, weighting processors 5169 to 5171 are disposed. At the $(N + 1)$th row and at the $(m + n + N + 1)$th column, a cell processor 5209 is disposed. At the $(N + 1)$th row and at any other columns, weighting processors 5210 to 5211 are disposed. At the jx-th row and at the $(m + n + N + jx)$th column, a cell processor 5242 is disposed. At the jx-th row and at any other column, weighting processors 5241 and 5243 are disposed. At the $(N + m)$the row and at the $(2m + n + N)$th column, a cell processor 5271 is disposed. At the $(N + m)$th row and at any other columns, weighting processors 5269 to 5270 are disposed. At the $(N + m + 1)$th row, weighting processors 5309 to 5311 are disposed. At the jy-th row, weighting processors 5339 to 5341 are disposed. At the $(N + m + n)$th row, weighting processors 5369 to 5371 are disposed.

2nd layer [from $(2m + n + N + 1)$th column to $(2m + 2n + N)$th column]

At the 0th row, input/output processors 5012 to 5014 are disposed. At the 1st row, weighting processors 5112 to 5114 are disposed. At the i-th row, weighting processors 5146 to 5148 are disposed. At the N-th row, weighting processors 5172 to 5174 are disposed. At the $(N + 1)$th row, weighting processors 5212 to 5214 are disposed. At the jx-th row, weighting processors 5244 to 5246 are disposed. At the $(N + m)$th row, weighting processors 5272 to 5274 are disposed. At the $(N + m + 1)$th row and at the $(2m + n + N + 1)$th column, a cell processor 5312 is disposed. At the $(N + m + 1)$th row and at any other columns, weighting processors 5313 to 5314 are disposed. At the jy-th row and at the $(2m + n + N + jy)$th column, a cell processor 5344 is disposed. At the jy-th row and at any other columns, weighting processors 5342, 5343, 5345, and 5346 are disposed. At the $(N + m + n)$th row and at the $(2m + 2n + N)$th column, a cell processor 5374 is disposed. At the $(N + m + n)$th row and at any other columns, weighting processors 5372 to 5373 are disposed. Each weighting processor and each cell processor on each layer are connected to a weighting processor or a cell processor disposed vertically and horizontally in lattice shape.

The rightmost weighting processors 5114, 5148, 5174, 5214, 5246, 5274, 5314, and 5346 and the cell processor 5374 are connected to the leftmost weighting processors 5101, 5131, 5161, 5201, 5231, 5261, 5301, 5331, and 5361 through the signal lines 5401 to 5409, respectively. In addition, the lowermost weighting processors 5361 to 5373 and the cell processor 5374 are connected to the input processors 5001 to 5005, the output processors 5006 to 5008, or the input/output processors 5009 to 5014 through the signal lines 5411 to 5424.

The input processors 5001 to 5005, the output processors 5006 to 5008, and the input/output processors 5009 to 5014 are connected to an external unit respectively through the signal lines 5021 to 5034.

The counter propagation network (CPN) has five layers as shown in Fig. 3. To the 1st and 5th layers, a pair of $\ell$-th vectors ($\ell = 1, 2, 3, ..., L$) are input as $(x(\ell), y(\ell))$, where

$$x(\ell) = (x_1(\ell), x_2(\ell), ..., x_{m-1}(\ell), x_m(\ell))$$

$$y(\ell) = (y_1(\ell), y_2(\ell), ..., y_{n-1}(\ell), y_n(\ell)).$$

From the 2nd and 4th layers, vectors $x(\ell)$, $y(\ell)$ are output as approximations of vectors $x(\ell)$, $y(\ell)$. When the output of the intermediate layer is represented as vector $z(\ell)$, the propagation function and learning rule of the CPN model are expressed by the following equations.

1st and 5th layers: Input layers

2nd and 4th layers:

$$x'_i(\ell) = \sum_{j=1}^{n} w^x{}_{ij}(\ell) \cdot z_j(\ell) \qquad .......... \quad (21)$$

$$\Delta w^x{}_{ij}(\ell) = (-cw^x{}_{ij}(\ell) + dx_j(\ell))z_j(\ell) \qquad (22)$$

$$w^x{}_{ij}(\ell+1) = w^x{}_{ij}(\ell) + \Delta w^x{}_{ij}(\ell) \qquad (23)$$

$$y'_i(\ell) = \sum_{j=1}^{n} w^y{}_{ij}(\ell) \cdot z_j(\ell) \qquad .......... \quad (24)$$

$$\Delta w^y{}_{ij}(\ell) = (-aw^y{}_{ij}(\ell) + by_j(\ell))z_j(\ell) \qquad (25)$$

$$w^y{}_{ij}(\ell+1) = w^y{}_{ij}(\ell) + \Delta w^y{}_{ij}(\ell) \qquad (26)$$

3rd layer:

$$\omega_i(\ell) = \sum_{j=1}^{n} u_{ij}(\ell) \cdot x_i(\ell)$$

$$+ \sum_{j=1}^{m} v_{ij}(\ell) \cdot y_i(\ell) \qquad .......... \quad (27)$$

$$z_i(\ell) = \Phi(\omega_i(\ell), S) \qquad (28)$$

$$\Delta u_{ij}(\ell) = \alpha(x_i(\ell) - u_{ij}(\ell)) z_i(\ell) \qquad (29)$$

$$u_{ij}(\ell + 1) = u_{ij}(\ell) + \Delta u_{ij}(\ell) \qquad .......... \quad (30)$$

$$\Delta u_{ij}(\ell) = \beta(y_i(\ell) - v_{ij}(\ell)) \, z_i(\ell) \tag{31}$$

$$v_{ij}(\ell + 1) = v_{ij}(\ell) + \Delta v_{ij}(\ell) \tag{32}$$

where

$$t(\ell) = [x(\ell), y(\ell), z(\ell), x'(\ell), y'(\ell)]$$

$$= (x_1(\ell), x_2(\ell), \ldots\ldots, x_m(\ell), y_1(\ell),$$

$$y_2(\ell), \ldots\ldots, y_n(\ell), z_1(\ell), z_2(\ell), \ldots\ldots,$$

$$z_n(\ell), x'_1(\ell), x'_2(\ell), \ldots\ldots, x'_m(\ell),$$

$$y'_1(\ell), y'_2(\ell), y'_2(\ell), \ldots\ldots,$$

$$y'_n(\ell)) \tag{33}$$

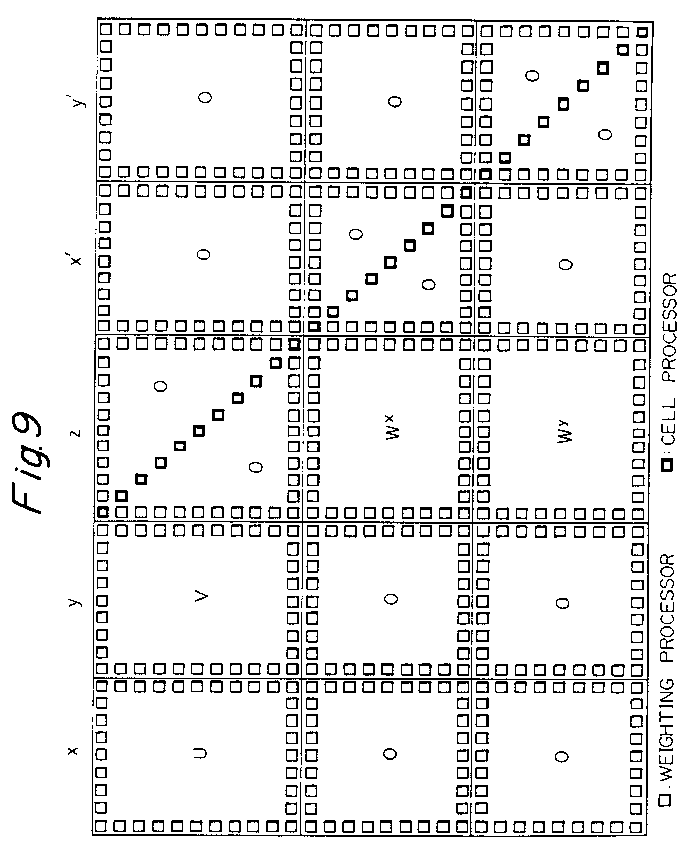

As shown in Fig. 9, when

$$U(\ell), \ V(\ell) \ 0, \ 0, \ 0$$

$$W(\ell) = 0, \ 0, \ W^x(\ell), \ 0, \ 0$$

$$0, \ 0, \ W^y(\ell), \ 0, \ 0 \tag{34}$$

The equations (21) and (24) are transformed into the following recurrence formulas as disclosed in the publications of Japanese Patent Application Nos. SHO 63-330971 titled "Neuro-computer" invented by Fujimoto and HEI 1-24307 titled "Neuro-computer" invented by Fujimoto.

$$x'^k_i(\ell) = x'^{k-1}_i(\ell)$$

$$+ w_{g(i)k}(\ell) \cdot t_k(\ell)$$

$$1 \leqq i \leqq n \tag{35}$$

$$y'^k_i(\ell) = y'^{k-1}_i(\ell)$$

$$+ w_{g(i)k}(\ell) \cdot t_k(\ell)$$

$$1 \leqq i \leqq m \tag{36}$$

Likewise, the equation (27) can be also transformed into the following recurrence formula.

$$\omega_h^k(\ell) = \omega_h^{k-1}(\ell)$$

$$+ w_{g(h)k}(\ell) \cdot t_k(\ell)$$

$$1 \leqq h \leqq N \tag{37}$$

The maximum value detection function expressed by the equation (28) can be transformed into the following recurrence formula and discriminant.

$$\o^i_j(\ell) =$$

$$\max\{\o j^{i-1}(\ell), \ \omega_i(\ell)\}$$

$$i \in S \tag{38}$$

$$\Phi \ (\omega_i(\ell), \ S) \ =$$

$$\begin{cases} 1 & \text{if } \omega_i \ (\ell) \ > \ \varnothing_j{}^{j-1} \ (\ell) \\ 0 & \text{otherwise} \end{cases} \qquad \text{......... (39)}$$

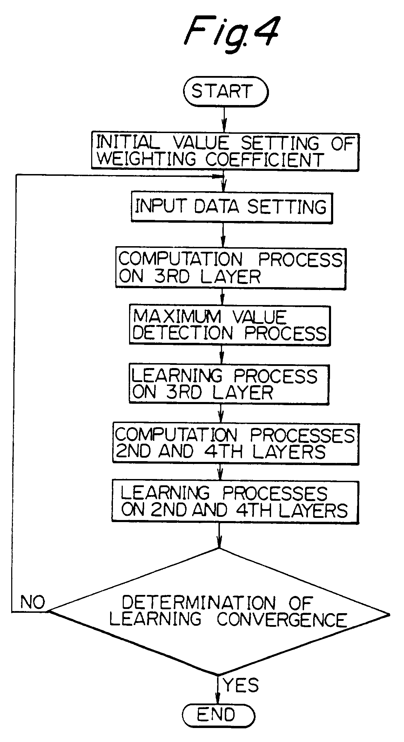

As shown in Fig. 4, the learning in CPN is executed by repeating the setting of input data, computation process on the 3rd layer, obtaining the maximum value, learning process on the 3rd layer, computation processes on the 2nd and 4th layers, and the learning processes on the 2nd and 4th layers.

Then, by referring to the flow chart of Fig. 4, the Kohonen's self-organization process and the Grossberg's learning process in CPN shown in Fig. 3 will be described in accordance with the operations of the above-mentioned processors in the lattice shaped torus connection shown in Fig. 1.

(A) Initial setting of the weighting coefficient

The states used in the weighting processors 5101 to 5103, 5131 to 5135, 5161 to 5163, 5201 to 5203, 5231 to 5233, 5261 to 5263, 5301 to 5303, 5331 to 5333, and 5361 to 5363 on 1st layer; the weighting processors 5104 to 5105, 5136 to 5137, 5164 to 5165, 5204 to 5205, 5234 to 5235, 5264 to 5265, 5304 to 5305, 5334 to 5335, and 5364 to 5365 on 5th layer; the weighting processors 5107 to 5108, 5138 to 5139, 5141 to 5142, 5166 to 5167, 5206 to 5208, 5236 to 5240, 5266 to 5268, 5306 to 5308, 5336 to 5338, and 5366 to 5368 on the 3rd layer; the weighting processors 5109 to 5111, 5143 to 5145, 5269 to 5171, 5210 to 5211, 5241, 5243, 5269 to 5270, 5309 to 5311, 5339 to 5341, and 5369 to 5371 on the 4th layer; the weighting processors 5112 to 5114, 5146 to 5148, 5172 to 5174, 5212 to 5214, 5244 to 5246, 5272 to 5274, 5313 to 5314, 5342 to 5343, 5345 to 5346, 5351, and 5372 to 5373 on the 2nd layer, namely, the weighting coefficient $w_{ij}(0)$ that each weighting processor in the state of connection flag = 1 stores is initialized by random numbers.

(B) Setting of the input data

The input processors 5001 to 5003 on the 1st layer receive $\ell$-th input data $x_i(\ell)$ (where $\ell = 0, 1, 2, ..., L$) from an external unit through the signal lines 5021 to 5023. The input processors 5004 and 5005 on the 5th layer receive input data $y_j(\ell)$ through the signal lines 5024 and 5025, respectively. Each input processor 5004, 5005 stores both of the input data and sends the input data $x_i(\ell)$ and $y_j(\ell)$ as $t_h(\ell)$ to the lower weighting processor.

(C) Computation process of the 3rd layer

The output values of $z_j(\ell)$ from the cell processors 5106, 5140, and 5168 on the 3rd layer, $x'_i(\ell)$ from the cell processors 5209, 5242, and 5271 on the 4th layer, and $y'_j(\ell)$ from the cell processors 5312, 5344, and 5374 on the 2nd layer are set to 0.

Then, as an example of each weighting processor and each cell processor, the computation processes of the weighting processor 5133 disposed at the i-th row and at the h-th column (where $h \leq m + n$) on the 1st layer and the cell processor 5140 disposed at the i-th row and at the k-th column (where $k = m + n + i$; $1 < i \leq N$) on the 3rd layer will be described.

[Weighting processor 5133 disposed at i-th row and at h-th column]

(1) The weighting processor 5133 receives the signal $t_h(\ell)$ sent from the upper weighting processor 5121 and sends it to the lower weighting processor 5151.

(2) (a) In the case where the connection flag = 1: The weighting processor 5133 adds the product of signal $t_h(\ell)$ and either $u_{ih}(\ell)$ or $v_{ih}(\ell)$ representing weighting coefficient $w_{g(h)k}(\ell)$ stored to a partial sum $\omega_i{}^{h-1}(\ell)$ sent from the left weighting processor 5132, computes a new partial sum $\omega_i{}^h(\ell)$, and then sends it to the right weighting processor 5234.

(b) In the case where connection flag = 0:
The weighting processor 5133 sends as $\omega_i{}^h(\ell)$ the partial sum $\omega_i{}^{h-1}(\ell)$ sent from the left weighting processor 5132 to the right weighting processor 5134.

[Cell processor 5140 disposed at the i-th row and at k-th column (where k = m + n + i)]

(1) The cell processor 5140 sends output $z_i(\ell)$ as $t_{g(i)}(\ell)$ to the lower weighting processor 5152.
(2) The cell processor 5140 sends the partial sum $\omega_i{}^k(\ell) = 0$ to the right weighting processor 5141.
(3) Since the connection flag = 0, the cell processor 5140 treats the partial sum $\omega_i{}^{k-1}(\ell)$ sent from the left weighting processor 5139 as the last product-sum result, namely cumulation value $\omega_i(\ell) = \omega_i{}^{k-1}(\ell)$.

In the above-mentioned computation process, when the output processor or the input/output processor receives $t_h(\ell)$ from the lowermost weighting processor or cell processor disposed at the same column thereof, the processor sends it to the just lower weighting processor or cell processor.

(D) Maximum value detection process

When the last product-sum results are obtained in all the cell processors 5106, 5140, and 5168 on the 3rd layer, the maximum value of the outputs of all the cell processors on the 3rd layer is computed. In the maximum value detection process, the cell processors 5209, 5242, 5271, 5312, 5344, and 5374 on the 2nd and 4th layers output the minimum value $-\infty$. Each weighting processor directly sends the value which is sent from the left weighting processor or the cell processor to the right weighting processor.

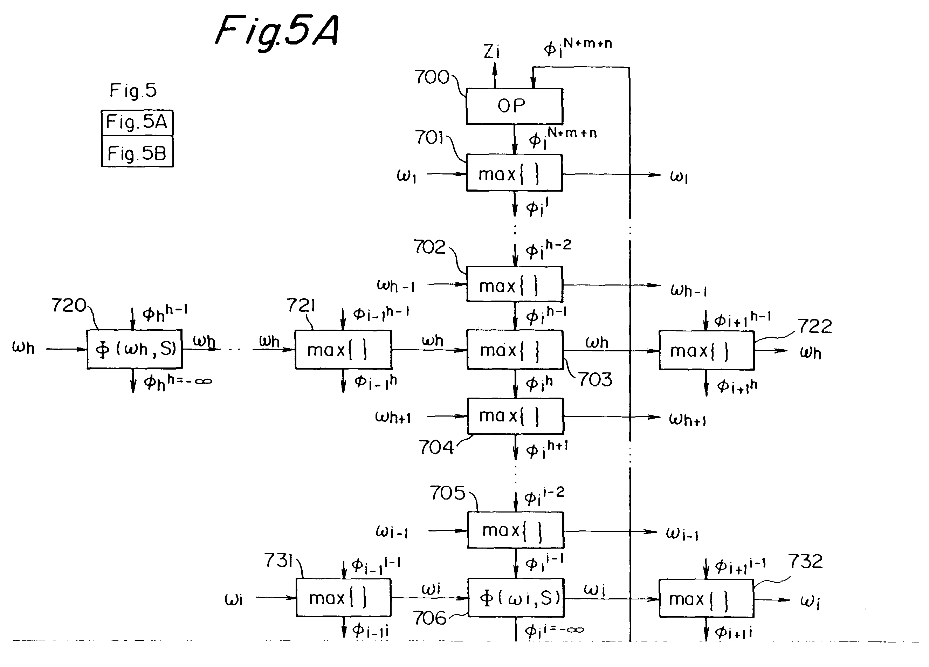

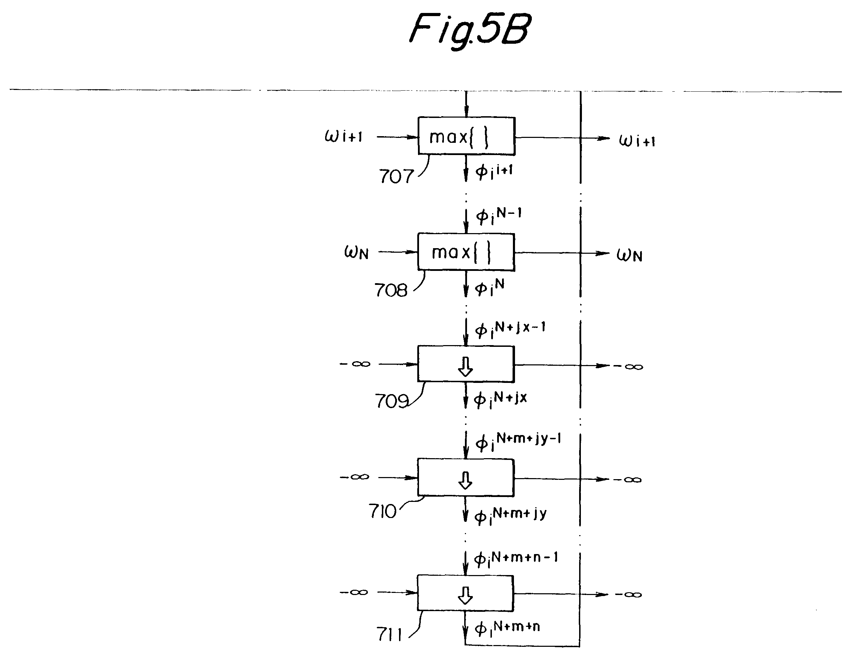

Fig. 5 shows the maximum value detection process at the k-th column (where k = m + n + i) shown in Fig. 3.

In Fig. 5, the computation process of the weighting processor 703 disposed at the h-th row and at the k-th column (where k = m + n + i; 1 < i ≤ N) and the cell processor 706 disposed at the i-th row and at the k-th column (where k = m + n + i; 1 < i ≤ N) are exemplified.

[Weighting processor 703 disposed at h-th row and at k-th column (where k = m + n + i)]

(1) The weighting processor 703 receives an accumulation value $\omega_h(\ell)$ sent from the left weighting processor 721 and sends it to the right weighting processor 722.
(2) The weighting processor 703 compares the local maximum value $\o_i{}^{h-1}(\ell)$ sent from the weighting processor 702 with a cumulation value $\omega_h(\ell)$ sent from the left weighting processor 21 and then sends the larger value as the local maximum value $\o_i{}^h(\ell)$ to the lower weighting processor 704 in accordance with the equation (38).

[Cell processor 706 disposed at i-th row and at k-th column (where k = m + n + i)]

(1) The cell processor 706 receives the accumulation value $\omega_i(\ell)$ sent from the left weighting processor 731 and sends it to the right weighting processor 732.
(2) The cell processor 706 sends the initial local maximum value $\o_i{}^i(\ell)$ ad $-\infty$ to the lower weighting processor 707.
(3) The cell processor 706 compares the local maximum value $\o_i{}^{i-1}(\ell)$ sent from the upper weighting processor 705 with the cumulation value $\omega_i(\ell)$ thereof in accordance with the equation (39).

(a) In the case where $\omega_i(\ell) > \o_i{}^{i-1}(\ell)$:
The maximum value detection function $\Phi(\omega_i(\ell), S) = 1$ is treated as the output of the cell processor 706.
(b) Otherwise:
The maximum value detection function $\Phi(\omega_i(\ell), S) = 0$ is treated as the output of the cell processor 706.

(E) Learning process on 3rd layer

In the CPN model having self-learning function without an aid of a teacher, the input vectors $x(\ell)$, $y(\ell)$ become teacher data.

The teacher data $x(\ell)$, $y(\ell)$ are sent downwardly from an input processor to each weighting processor at the same column thereof through weighting processors. The output of each cell processor is sent to each weighting processor at the same row thereof through the weighting processors at the same row thereof.

The weighting coefficient changed by the self-learning is only in the weighting processor which is disposed at the same row as the cell processor on the 3rd layer and which outputs the maximum value detection function $\Phi(\omega_i(\ell), S) = 1$, and where the connection flag is 1. The changed amount of the weighting coefficient is expressed by the equations (29) and (31).

Examples of the computation processes of the cell processor 5140 disposed at the i-th row and at the k-th column (where k = m + n + i; 1 < i ≤ N) on the 3rd layer and the weighting processor 5133 disposed at the i-th row and at the h-th column (where h ≤ m + n) on the 1st layer are described in the following.

[Cell processor 5140 disposed at i-th row and at k-th column (where k = m + n + i) on 3rd layer]

(1) The cell processor 5140 outputs the result $z_i(\ell)$ of the maximum value detection computed in accordance with the equation (28) to the right weighting processor 5141 at the same row thereof.

(2) Simultaneously, the cell processor 5140 outputs 0 (zero) to the lower weighting processor 5152 at the same column thereof.

[Weighting processor 5133 disposed at i-th row and at h-th column]

(1) The weighting processor 5133 receives signal [teacher input data] $x_h(\ell)$ sent from the upper weighting processor 5121 at the same column thereof and sends it to the lower weighting processor 5151 at the same column thereof.

(2) the weighting processor 5133 receives a signal $z_i(\ell)$ sent from the left weighting processor 5132 at the same row thereof and sends it to the right weighting processor 5134 at the same row thereof.

(3) (a) In the case where the connection flag = 1:

The weighting processor 5133 multiplies the difference between the teacher data $x_h(\ell)$ (or $y_h(\ell)$) received from the upper weighting processor 5121 at the same column thereof and the stored weighting coefficient $u_{ih}(\ell)$ (or $v_{ih}(\ell)$) by a cell processor's output $z_i(\ell)$ sent from the left weighting processor by the learning constant $\alpha$ (or $\beta$) in accordance with the equations (29) and (31), computes the changed amount $\Delta u_{ih}(\ell)$ (or $v_{ih}(\ell)$) of the weighting coefficient, and updates the value of the weighting coefficient in accordance with the equations (30) and (32).

(b) In the case where the connection flag = 0:
   The above-mentioned weighting coefficient is not changed.
   The rightmost weighting processor sends the signal $z_i(\ell)$ to the leftmost weighting processor.

(F) computation processes on 2nd and 4th layers

In the computation processes on the 2nd and 4th layers, the output values $z_j(\ell)$ from the cell processors 5106, 5140, and 5168 on the 3rd layer are sent to each weighting processor at the same column thereof through the weighting processors at the same column thereof.

Each weighting processor and each cell processor execute the computation process expressed by the equations (21) and (24) as the following example.

An example of the computation process of the cell processor 5140 disposed at the i-th row and at the k-th column (where k = M + n + i; $1 < i \leq N$) on the 3rd layer, the weighting processor 5238 disposed at the jx-th row and at the k-th column (where k = m + n + i) on the 3rd layer, and the cell processor 5344 disposed at the jy-th row and at the k-th column (where k = 2m + n + N + jy; $1 < i \leq n$) are described. When an output processor or an input/output processor receives $t_h(\ell)$ from the lowest weighting processor or cell processor at the same column thereof, the processor immediately sends it to the just lower weighting processor or cell processor.

[Cell processor 5140 disposed at i-th row and at k-th column (where k = m + n + i) on 3rd layer]

(1) the cell processor 5140 sends the output $z_i(\ell)$ from the cell processor 5140 as $t_h(\ell)$ to the just lower weighting processor 5152 at the same column thereof.

[Weighting processor 5238 disposed at jx-th row and at k-th column (where k = m + n + i) on 3rd layer]

(1) The weighting processor 5238 receives the signal $t_h(\ell)$ sent from the upper weighting processor 5221 at the same column thereof and sends it to the lower weighting processor 5251 at the same column thereof.

(2) (a) In the case where the connection flag = 1:

The weighting processor 5238 adds the product of the signal $t_h(\ell)$ and the stored weighting coefficient $u_{ih}(\ell)$ (or $v_{ih}(\ell)$) to the partial sum $x_i^{k-1}(\ell)$ or $y'^{k-1}_i(\ell)$ sent from the left weighting processor 5237 in accordance with the equation (35) or (36) and sends the result as a new partial sum $x'^k_i(\ell)$ (or $y'^k_i(\ell)$) to the right weighting processor 5239.

(b) In the case where the connection flag = 0:
   The cell processor 5140 sends the partial sum $x'^{k-1}_i(\ell)$ (or $y'^{k-1}_i(\ell)$) sent from the left weighting processor 5237 as the new partial sum $x'^k_i(\ell)$ (or $y'^k_i(\ell)$) to the right weighting processor 5329.

[Cell processor 5344 disposed at jy-th row and at k-th column (where k = 2m + n + N + jy; 1 < i $\leq$ n) on 2nd layer]

(1) The cell processor 5344 sends the output $y'_i(\ell)$ (or $x'_i(\ell)$) from the cell processor 5344 as $t_h(\ell)$ to the lower weighting processor 5351 at the same column thereof.

(2) The cell processor 5344 sends the partial sum $y'^{k-1}_i(\ell) = 0$ (or $x'^{k-1}_i(\ell) = 0$) to the right weighting processor 5345 at the same row thereof.

(3) Since the connection flag = 0, the cell processor 5344 treats the partial sum $y'^{k-1}_i(\ell)$ (or $x'^{k-1}_i(\ell)$) sent from the left weighting processor 5343 at the same row thereof as the last product/sum result $y'_i(\ell) = y'^{k-1}_i(\ell)$ (or $x'_i(\ell) = x'^{k-1}_i(\ell)$).

(G) Learning processes on 2nd and 4th layers

In the learning processes on the 2nd and 4th layers, like the learning process on the 3rd layer, self-learning without an aid of a teacher is executed. Thus, the input vectors $x(\ell)$, $y(\ell)$ become teacher data. In the case of the 2nd and 4th layers, the teacher data $x(\ell)$, $y(\ell)$ are received from a input/output processor. Then, the received teacher data $x(\ell)$, $y(\ell)$ are stored temporarily and sent from each cell processor disposed at each column on the 2nd and 4th layer through the weighting processor at the same column thereof. After the above-mentioned process, the teacher data $x(\ell)$, $y(\ell)$ are sent from each cell processor to each weighting processor at the same row thereof through the weighting processors at the same row thereof.

The outputs from the cell processors on the 3rd layer are sent to each weighting processor at the same column thereof through the weighting processors at the same column thereof.

The weighting coefficient which is changed by the self-learning process is the coefficient in the weighting processors which are connected to the output of cell processors on the 3rd layer and which output the maximum value detection function $\Phi(\omega_i(\ell), S) = 1$.

The changed amount of the weighting coefficient is expressed by the equations (22) and (25).

An example of the computation processes of the cell processor 5140 disposed at the i-th row and at the k-th column (where k = m + n + i; 1 < i $\leq$ N) on the 3rd layer, the weighting processor 5238 disposed at the jx-th row and at the k-th column (where k = m + n + i) on the 3rd layer, and the cell processor 5344 disposed at the jy-th row and at the k-th column (where k = 2m + n + N + jy; 1 < i $\leq$ n) on the 2nd layer will be described in the following.

When an output processor or an input/output processor receives $t_h(\ell)$ from the lowest weighting processor or the cell processor at the same column thereof, the output processor or the input/output processor sends $t_h(\ell)$ to the weighting processor or the cell processor disposed just below thereof.

[Cell processor 5140 disposed at i-th row and at k-th column (where k = m + n + i) on 3rd layer]

(1) The cell processor 5140 sends the output $z_i(\ell)$ as $t_k(\ell)$ to the weighting processor 5152 disposed just below thereof at the same column.

[Weighting processor 5238 disposed at the jx-th row and at k-th column (where k = m + n + i) on 3rd layer]

(1) The weighting processor 5238 receives the signal $t_k(\ell)$ sent from the weighting processor 5221 disposed above thereof at the same column and sends the signal $t_k(\ell)$ to the lower weighting processor 5251 at the same column thereof.

(2) The weighting processor 5238 receives the teacher data $x_j(\ell)$ (or $y_j(\ell)$) sent from the left weighting processor 5237 at the same row thereof and sends it to the right weighting processor 5239 at the same row thereof.

(3) (a) In the case where the connection flag = 1:

As expressed by the equation (22) or (25), the weighting processor 5238 multiplies the teacher data $x_j(\ell)$ (or $y_j(\ell)$) sent from the left weighting processor 5237 at the same row thereof by the coefficient d (or the coefficient b), adds the resultant value to the value of which the stored weighting coefficient $W^x_{ij}(\ell)$ (or $W^y_{ij}(\ell)$) is multiplied by the constant - c (or the constant - a), multiplies the just obtained result by the output $z_i(\ell)$ of the cell processor on the 3rd layer and computes the changed amount of the weighting coefficient $\Delta W^x_{ij}(\ell)$ (or $\Delta W^y_{ij}(\ell)$), and then updates the weighting coefficient value in accordance with the equations (23) and (26).

(b) In the case where the connection flag = 0:

The weighting coefficient is not changed.

[Cell processor 5344 disposed at jy-th row and at k-th column (where k = 2m + n + N + jy; 1 < i $\leq$ n) on 2nd layer]

(1) The cell processor 5344 sends the teacher data $y_{jy}(\ell)$ (or $x_{jy}(\ell)$) which has been received from the input/output processor 5013 to the weighting processor 5345 disposed on the right side thereof at the same row.

(H) Determination of learning convergence

In the determination of learning convergence, it is determined whether or not the average value or the maximum value of the changed amount in the weighting coefficient decreases so as to know whether or not the CPN is in stable state. When it is determined that the CPN is in the stable state, the learning process is terminated. On the other hand, when it is determined that the CPN is not in the stable state, and the mode is returned back to the above-mentioned process (B). Then in the process (B), the data is repeatedly input so as to continue the learning process.

The CPN computation processes including the maximum value detection process which is executed by the basic processors in the lattice shaped torus connection have been described above, and such computation processes can be executed by the basic processors in the lattice shaped rectangular planar connection likewise.

A neuro-computer which includes P x Q real processors in the lattice shaped torus connection, assuming the weighting processors, the cell processors, the input processors, the output processors, and the input/output processors being the virtual processors, will be described in the following.

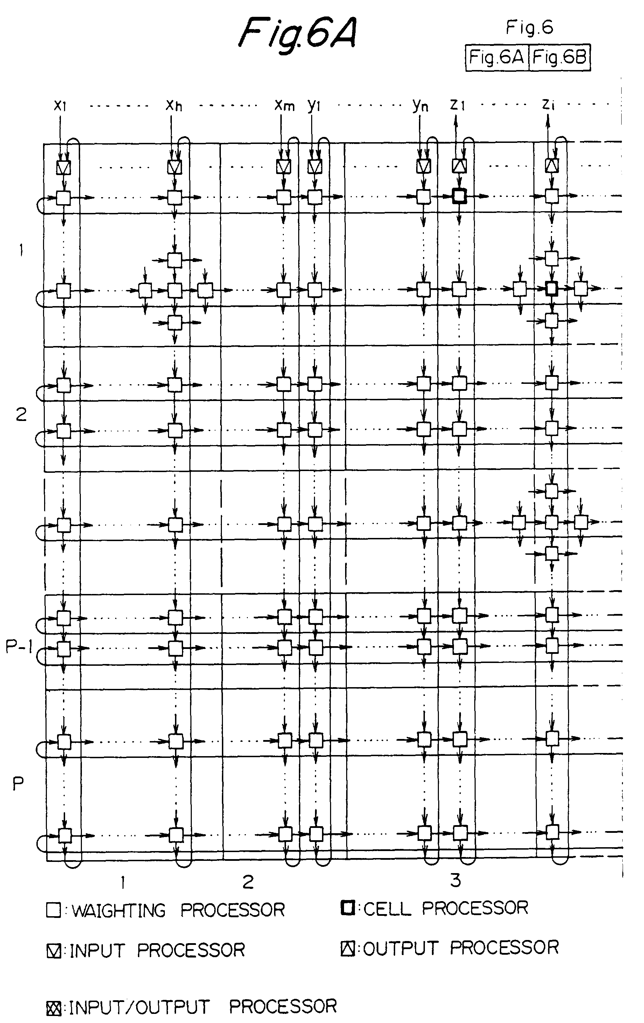

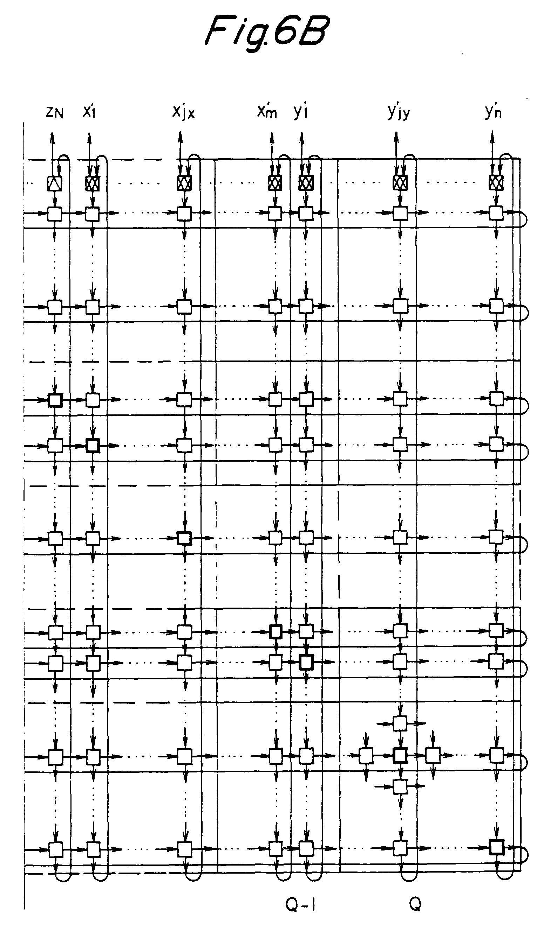

Assuming that all the above-mentioned the weighting processors, the cell processors, the input processors, the output processors, and the input/output processors are virtual processors, then a virtual processor group disposed in a lattice shape of (N + m + n + 1) rows by (N + 2m + 2n) columns as shown in Fig. 6 is divided into P portions (where P < N + m + n + 1) in the vertical direction and Q portions (where Q < N + 2m + 2n) in the horizontal direction, respectively.

Then, by assigning the real processors 910 to 934 to the respective divided rectangular areas, an array of the real processors in a lattice shape of P rows by Q columns is formed.

Each physical processor is connected to the upper, the lower, the left, and the right physical processors in the lattice shape. The rightmost physical processors 914, 919, 924, 929, and 934 are connected to the leftmost physical processors 910, 915, 920, 925, and 930 at the same row thereof through the signal lines 940 to 944, respectively. The lowermost physical processors 930 to 934 are connected to the uppermost physical processors at the same column thereof through the signal lines 935 to 939, respectively. In addition, to provide the uppermost physical processors 910 to 914 with an I/O function, the physical processors 910 to 914 are connected to a bus line 906 of a host computer 900 through the signal lines 901 to 905.

However, at least one of the physical processors provided with the I/O function must be disposed at each column, and they are not necessary to be disposed at the uppermost row.

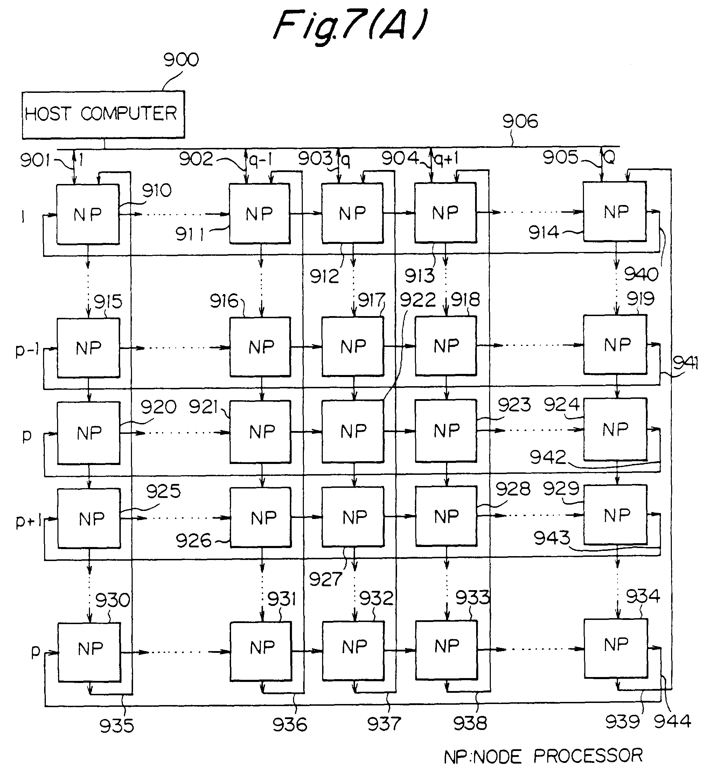

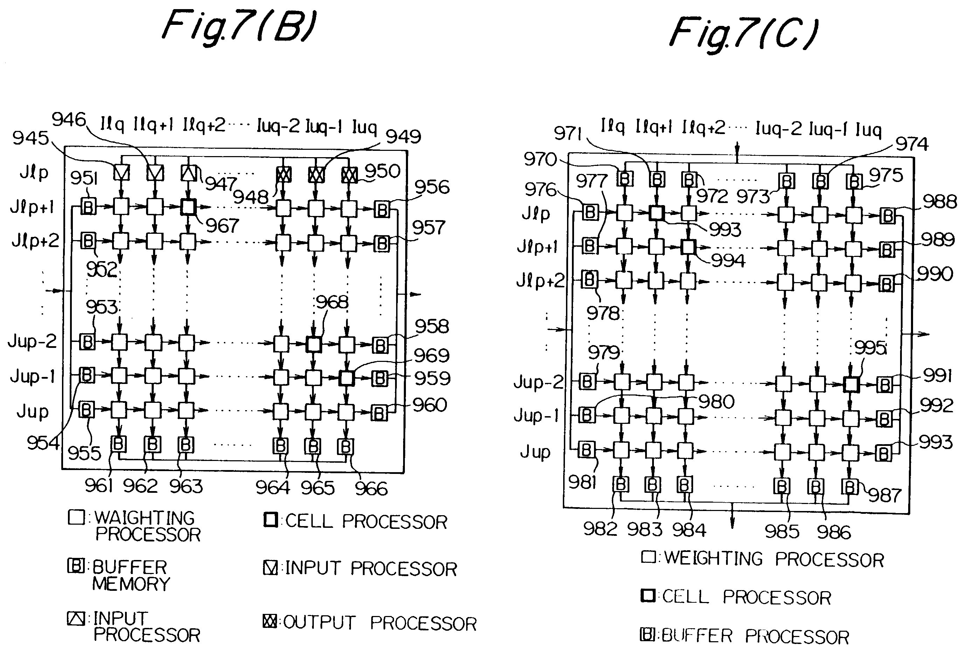

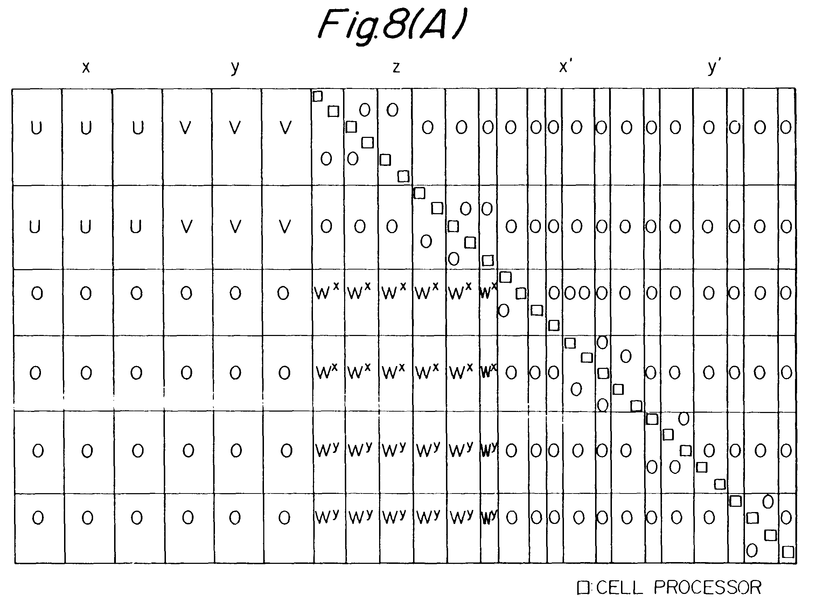

As shown in Fig. 7 (b), the physical processors provided with the I/O function are assigned to the computation function and the storage function of the input processors, the output processors, the input/output processors, the weighting processors, and the cell processors in the assigned rectangular area.

As shown in Fig. 7 (c), other physical processors are assigned to the computation function and the storage function of the weighting processors and the cell processors in the assigned rectangular area.

The physical processor group in the above-mentioned structure forms a physical processor group in the lattice shaped torus connection. Since each real processor is positioned at a joint (intersection) of the lattice, it is named a node processor hereinafter.

The node processor may be a conventional microprocessor provided with a data memory for storing the weighting coefficient of a weighting processor, an output value of a cell processor, and an intermediate value of learning process and with an I/O function for connections in four directions. The node processor may have preferably a high speed product-sum computation function.

By selecting the proper row value P and the proper column value Q and by using a node processor group in the lattice shaped torus connection, a neuro-computer for executing a parallel computation of a large scale neural network can be accomplished with the reasonable number of processors.

When the virtual processors are divided into the rectangular areas and assigned them to the node processors, they can be expressed by the partial sum equations of (21), (24), (27), (40), (42), (44), and by the recurrence formulas of the equations (41), (43), and (45).

$$A_i{}^q(\ell) \;=\; \sum_{k=1\ell q}^{1uq} w_{g(i)k}(\ell) \cdot t_k(\ell)$$

$$1 \;\le\; i \;\le\; n \qquad\qquad \dots\dots\; (40)$$

$$x'_i{}^q(\ell) = x'_i{}^{q-1}(\ell) + A_i{}^q(\ell)$$

$$1 \le i \le n \qquad\qquad (41)$$

$$B_i{}^q(\ell) \;=\; \sum_{k=1\ell q}^{1uq} w_{g(j)k}(\ell) \cdot t_k(\ell)$$

$$1 \;\le\; j \;\le\; m \qquad\qquad \dots\dots\; (42)$$

$$y'_i{}^q(\ell) = y'_i{}^{q-1}(\ell) + B_j{}^q(\ell)$$

$$1 \le j \le m \qquad\qquad (43)$$

$$C_h{}^q(\ell) \;=\; \sum_{k=1\ell q}^{1uq} w_{g(h)k}(\ell) \cdot t_k(\ell)$$

$$1 \;\le\; i \;\le\; N \qquad\qquad \dots\dots\; (44)$$

$$\omega_h{}^q(\ell) = \omega_h{}^{q-1}(\ell) + C_h{}^q(\ell)$$

$$1 \le h \le N \qquad\qquad (45)$$

In addition, the equation (28) can be transformed into equation (46) with respect to the maximal value detection, equation (47) with respect to the recurrence formula, and equation (48) with respect to the discriminant.

$$E_j{}^P(\ell) = \max\{\omega_{llp}(\ell),\; \omega_{llp+1}(\ell) \dots\dots,\; \omega_{lup-1}(\ell),\; \omega_{lup}(\ell\} \qquad (46)$$

$$\varnothing_j{}^P(\ell) = \max\{\varnothing_j{}^{P-1}(\ell),\; E_j{}^P(\ell)\} \qquad (47)$$

$$\Phi(\omega_j(\ell),\; S) \;=\;$$

$$\begin{cases} 1 & \text{if } \omega_j(\ell) \;\ge\; \varnothing_j{}^P(\ell) \\ \\ 0 & \text{otherwise} \end{cases} \qquad \dots\dots\; (48)$$

As described in the transformation of the above equation, although each node processor successively executes a process, P × Q node processors execute processes in parallel. Particularly, for a time consuming product-sum computation, the partial sum computation, which has been executed by individual weighting processors, is executed by the node processors as a partial sum in the assigned rectangular areas.

Now, by referring to Fig. 7 (a), (b), and (c), a simulation of the CPN will be described in accordance with a process flow shown in Fig. 4.

(A) Initial setting of the Weighting coefficient

The node processors 910 to 934 initialize the weighting coefficients which are stored in the weighting processors assigned and having the connection flag = 1 by the random numbers. At that time, each node processor executes such initialize operation in parallel at the same time.

(B) Setting the input data

The node processors 910 to 914 with the I/O function receive the input data according to each input processor assigned thereto from the host computer 900 successively and store the received input data in the buffers 945 and 946. At the same time, the node processors 910 to 914 receive the input data in accordance with each input/output processor assigned thereto from the host computer 900 and store the received input data as the teacher data in the buffers 948 to 950 of the input/output processor.

(C) Computation process on the 3rd layer

In the computation process on the 3rd layer, each node processor assigned to a cell processor sets the output values $z_j(\ell)$, $x'_i(\ell)$, and $y'_i(\ell)$ of the cell processor to "0". As an example of the computation processes of each weighting processor and each cell processor, the computation process executed by the node processor 922 disposed at the p-th row and at the q-th column will be described. Note that these processes are executed by individual node processors in parallel at the same time.

(1) When the column h is present in a rectangular area assigned to the node processor 922 disposed at the p-th row and at the q-th column, the node processor 922 successively sends $t_h(\ell)$ as $t_h(\ell) = x_h(\ell)$ or $y_h(\ell)$ along with the column number h to the just lower node processor 927.

When the rectangular area includes the column k = g(i) where a cell processor is present, the node processor 922 successively sends $t_k(\ell)$ as $t_k(\ell) = z_i(\ell)$, $x'_i(\ell)$, or $y'_i(\ell)$ along with the column number k to the just lower node processor 927 at the same column thereof.

For the columns where a cell processor and an input/output processor are absent, the node processor 922 successively receives the signal $t_i(\ell)$ [$i \in \{l\ell q, l\ell q + 1, ..., luq - 1, luq\}$] sent from the upper node processor 917 at the same column thereof, and stores it in the input/output processor 948 or the buffer 970, 973, or 974 for each column, and successively sends $t_i(\ell)$ along with the column number i to the lower node processor 927 at the same column.

In the case of p = P, namely, for the lowermost node processor 932, the node processor 922 successively sends $t_i(\ell)$ along with the column number i to the uppermost node processor 912 through a signal line 937.

(2) When the virtual processors assigned to the node processor 922 disposed at the p-th row and at the q-th column include a cell processor on the 3rd layer, the node processor 922 successively sends the initial value $\omega_j^q(\ell) = 0$ of the partial-sum along with the row number j of the cell processor (included on the 3rd layer) to the right node processor 923.

(3) The node processor 922 disposed at the p-th row and at the q-th column computes the partial-sum $C_j^q(\ell)$ of each weighting processor in the rectangular area assigned thereto for each row in accordance with the equation (44) and stores the computed result in the buffers 956 to 960 and 988 to 993.

(4) When the node processor 922 receives the partial-sum $\omega_j^{q-1}(\ell)$ along with the row number j from the left node processor 921, it checks whether or not the computation of the partial-sum $c_j^q(\ell)$ in the rectangular area has been completed.

(a) In the case where the computation of partial-sum has been completed:
The node processor 922 computes a new partial-sum $\omega_j^q(\ell)$ in accordance with the equation (45).
(b) In the case where the computation of the partial-sum in the rectangular area has not been completed:
The node processor 922 stores the partial-sum $\omega_j^{q-1}(\ell)$ along with the row number j in a corresponding location of the buffers 956 to 960 and 988 to 992 and waits until the computation of the partial-sum $C_j^q(\ell)$ in the rectangular area is completed. When the computation of the partial sum $C_j^q(\ell)$ in the rectangular area has been completed, the node processor 922 immediately computes the new partial-sum $\omega_j^q(\ell)$ in accordance with the equation (45).
Thereafter, the node processor 922 checks whether a cell processor is present at the j-th row in the rectangular area.
(c) In the case where a cell processor is absent at the j-th row:
The node processor 922 sends the new partial-sum $\omega_j^q(\ell)$ along with the row number j to the right node processor 923.
(d) In the case where a cell processor is present at the j-th row:
The node processor 922 treats the new partial-sum $\omega_j^q(\ell)$ as the product-sum computation result $\omega_j(\ell)$.

When the cell processor is present at the rightmost position, namely, q = Q, the node processor 922 sends the new partial-sum $\omega_j^O(\ell) - \omega_j^Q(\ell)$ along with the row number j to the leftmost node processor 920.

(D) Maximum Value Detection Process

After the last product-sum results are obtained in all the cell processors on the 3rd layer, the maximum value of the outputs from all the cell processors on the 3rd layer is computed.

(1) When the rectangular area assigned to the node processor 922 disposed at the p-th row and at the q-th column on the 3rd layer includes a row k = g(j) where a cell processor on the 3rd layer is present, the node processor 922 successively sends $\omega_j(\ell)$ with the row number k to the right node processor 923.

When the rectangular area includes the row k = g(j) where a cell processor on the 2nd or 4th layer is present, the node processor 922 successively sends -∞ along with the row number k to the right node processor 923.

For the rows where a cell processor is absent, the node processor 922 successively receives the signal $\omega_j(\ell)$ or -∞ [j{Jℓp, Jℓp + 1, ..., Jup - 1, Jup}] along with the row number j from the left node processor 921, stores it in the buffers 951 to 955 and 976 to 981 for each row, and successively sends $\omega_j(\ell)$ or -∞ along with the row number j to the right node processor 923.

For the rightmost node processor, namely, q = Q, the node processor 922 successively sends $\omega_j(\ell)$ or -∞ along with the row number j to the leftmost node processor.

(2) For the weighting processors in the rectangular area assigned to the node processor 922 disposed at the p-th row and at the q-th column, the node processor 922 computes the partial maximal value $E_j^p(\ell)$ in the rectangular area for each column in accordance with the equation (46). After the node processor 922 has completed the computation, it stores the computed result in the buffers 961 to 966 and 982 to 987.

(3) When the node processor 922 receives the maximal value $ø_j^{p-1}(\ell)$ along with the column number j from the upper node processor 917, it checks whether the computation of the partial maximal value $E_j^p(\ell)$ in the rectangular area has been completed

(a) In the case where the computation has been completed:
The node processor 922 computes a new maximal value $ø_j^p(\ell)$ in accordance with the equation (47).
(b) In the case where the computation has not been completed:
The node processor 922 stores the maximal value $ø_j^{p-1}(\ell)$ along with the column number j temporarily in a corresponding position of the buffers 961 to 966 and 982 to 987 and waits until the computation of the partial maximal value $E_j^p(\ell)$ in the rectangular area is completed. After the computation of the partial maximal value $E_j^p(\ell)$ in the rectangular area has been completed, the node processor 922 immediately computes a new maximal value $ø_j^p(\ell)$.
Then, the node processor 922 checks whether or not a cell processor is present at the j-th column in the rectangular area.
(c) In the case where a cell processor is absent:
The node processor 922 sends the new maximal value $ø_j^p(\ell)$ along with the column number j to the lower node processor 927.
(d) In the case where a cell processor is present:
The node processor 922 compares the new maximal value $ø_j^p(\ell)$ with the cumulation value $\omega_j(\ell)$ of the cell processor in accordance with the equation (48).

When the accumulation value $\omega_j(\ell)$ is larger than the maximal value $ø_j^p(\ell)$, the node processor 922 treats the maximum value detection function $\Phi(\omega_j(\ell), S) = 1$ as the output of the cell processor.

Otherwise, the node processor 922 treats the maximum value detection function $\Phi(\omega_j(\ell), S) = 0$ as the output of the cell processor. In the case of the lowermost node processor, namely, the node processor 932 where p = P, the node processor 922 sends the new maximal value $ø_j^o(\ell) = ø_j^p(\ell)$ along with the column number j to the uppermost node processor 903.

(E) Learning Process on 3rd Layer

In setting the teacher data, the node processors 910 to 914 provided with the I/O function send the input data $x_h(\ell)$ or $y_h(\ell)$ stored in each input processor in the rectangular area assigned to each node processor as the teacher data.

An example of computation processes of the uppermost node processors 910 to 914 with the I/O function and the node processor 922 disposed at the p-th row and at the q-th column will be described in the following. Note that these processes are executed by each node processor in parallel at the same time.

(1) The node processors 910 to 914 provided with the I/O function send the input data $x_h(\ell)$ or $y_h(\ell)$ stored in each input processor in the rectangular area assigned thereto as the teacher data along with the column number h to the lower node processor for each column.

Each node processor receives the teacher data from the upper node processor and sends it to the lower node processor.

(2) A node processor including a cell processor on the 3rd layer outputs each output value $z_i(\ell)$ of the cell processor on the 3rd layer along with the row number i to the right node processor.

A node processor including the cell processors on the 2nd and 4th layers sends 0 as output $x'_i(\ell)$ and $y'_i(\ell)$ along with the row number i to the right node processor.

Each node processor receives an output value sent from the left node processor, stores it in a buffer, and sends it along with the row number i to the right node processor which is an input/output processor.

(3) A node processor including a weighting processor on the 3rd layer computes the changed amount $\Delta u_{ij}(\ell)$ and $\Delta v_{ij}(\ell)$ by using the input data sent from the upper node processor, the output value $z_i(\ell)$ sent from the left node processor, and the weighting coefficient $u_{ij}(\ell)$ and $v_{ij}(\ell)$ in accordance with the equations (29) to (32) and updates each weighting coefficient.

(F) Computation processes on 2nd and 4th layers

In the computation processes on the 2nd and 4th layers, each node processor assigned to a cell processor sets the output values $x'_j(\ell)$ and $y'_j(\ell)$ of the cell processors, except for those on the 3rd layer, to 0.

Then, the computation processes of each weighting processor and each cell processor will be described by exemplifying the computation process of the node processor 922 disposed at the p-th row and at the q-th column. Note that these processes are executed by individual node processors in parallel at the same time.

(1) When the rectangular area assigned to the node processor 922 disposed at the p-th row and at the q-th column includes a column h where an input processor is present, the node processor 922 successively sends $t_h(\ell)$ as $t_h(\ell)$ = $x_h(\ell)$ or $y_h(\ell)$ along with the column number h to the lower node processor 927.

When the rectangular area includes a column k = g(i) where a cell processor is present, the node processor 922 successively sends $t_k(\ell)$ as $t_k(\ell) = z_i(\ell)$, $x'_i(\ell)$ or $y'_i(\ell)$ along with the column number k to the node processor 927.

For the columns where a cell processor or an input processor is absent, the node processor 922 successively receives the signal $t_i(\ell)$ [$i \in \{l\ell q, l\ell q + 1, ..., luq-1, luq\}$] sent from the upper node processor 917, stores it in the input/output processor 948 or the buffer 970, 973, or 974 for each column, and successively sends it along with the column number i to the lower node processor 927.

For the lowermost node processor, namely, the node processor 932 where p = P, the node processor 922 successively sends $t_i(\ell)$ with the column number i to the uppermost node processor 912.

(2) When the virtual processor assigned to the node processor disposed at the p-th row and at the q-th column includes a cell processor on the 2nd or 4th layer, the node processor 922 successively sends the initial value of the partial-sum $x'^q_j(\ell) = 0$ or $y'^q_j(\ell) = 0$ along with the row number j for each cell processor to the right node processor 923.

(3) For the weighting processors in the rectangular area assigned to the node processor 922 disposed at the p-th row and at the q-th column, the node processor 922 computes the partial-sum $A^q_j(\ell)$ or $B^q_j(\ell)$ in the rectangular area for each row in accordance with the equation (40) or (42). After the node processor 922 has completed the computation, it stores the computed result in the buffers 956 to 960 and 988 to 993.

(4) When the node processor 922 receives the partial-sum $x'^{q-1}_j(\ell)$ or $y'^{q-1}_j(\ell)$ along with the row number j from the left node processor 921, it checks whether or not the computation of the partial-sum $A^q_j(\ell)$ or $B^q_j(\ell)$ in the rectangular area has been completed.

(a) In the case where the computation has been completed:

The node processor 922 computes the new partial-sum $x'^q_j(\ell)$ or $y'^q_j(\ell)$ in accordance with the equation (41) or (43).

(b) In the case where the computation has not been completed:

The node processor 922 stores the partial-sum $x'^{q-1}_j(\ell)$ or $y'^{q-1}_j(\ell)$ along with the row number i or j temporarily in a corresponding position of the buffers 956 to 960 and 988 to 992 and waits until the computation of the partial-sum $A^q_j(\ell)$ or $B^q_j(\ell)$ is completed. After the computation of the partial-sum $A^q_j(\ell)$ or $B^q_j(\ell)$ in the rectangular area has been completed, the node processor 922 immediately computes the new partial-sum $x'^q_j(\ell)$ or $y'^q_j(\ell)$ in accordance with the equation (41) or (43).

Then, the node processor 922 checks whether or not a cell processor is present at the j-th row of the rectangular area.

(c) In the case where the cell processor is absent:

The node processor 922 sends the new partial-sum $x'^q_j(\ell)$ or $y'^q_j(\ell)$ along with the row number j to the right node processor 923.

(d) In the case where the cell processor is present:

The node processor 922 treats the new partial-sum $x'^q_j(\ell)$ or $y'^q_j(\ell)$ as the product-sum computation result $x'_j(\ell)$ or $y'_j(\ell)$.

In the case of the rightmost position, namely q = Q, the node processor 922 sends the new partial-sum $x'^o_j(\ell) = x'^Q_j(\ell)$ or $y'^o_j(\ell)$ along with the row number j to the leftmost node processor 920.

Last, the node processor 922 stores the product-sum result $x'_j(\ell)$ or $y'_j(\ell)$ in a storage area according to the cell processor.

(G) Learning processes on 2nd and 4th layers

Since the learning processes on the 2nd and 4th layers are of self-learning without an aid of a teacher, the input data $x(\ell)$ or $y(\ell)$ becomes the teacher data. The teacher data is sent to each cell processor through the input/output processors. In the learning process, each node processor executes the following process. Then, the computation processes of the input/output processors, the weighting processors and the cell processors assigned to each node processor will be described by exemplifying the computation process of the node processors 910 to 914 provided with the I/O function disposed at the 1st row and the node processor 922 disposed at the p-th row and at the q-th column. However, note that these processes are executed by each node processor in parallel at the same time.

(1) When the virtual processor group in the rectangular area assigned to the node processors 910 to 914 at the 1st row includes an input/output processor, the node processors 910 to 914 receive the corresponding input data $x_h(\ell)$ or $y_h(\ell)$ from the host computer through the bus line 906 and send it to the lower node processor.

When a cell processor at the h-th column according to the input data $x_h(\ell)$ or $y_h(\ell)$ sent from the upper node processor is present, each node processor stores the input data in the cell processor.

(2) When the virtual processor group in the rectangular area assigned to the node processor 922 disposed at the p-th row and at the q-th column includes a cell processor at the j-th row and at the i = g(j)th column on the 2nd or 4th layer, the node processor 922 sends the input data $x_j(\ell)$ or $y_j(\ell)$ which has been received along with the row number j to the right node processor 923.

When a cell processor on the 3rd layer is present at the j-th row and at the i = g(j)-th column, the node processor 922 sends the output $z_j(n)$ of the cell processor along with the column number i to the lower node processor.

For the rows where a cell processor or an input/output processor is absent, the node processor 922 sends the input data $x_j(\ell)$ or $y_j(n)$ which has been sent from the left node processor 921 along with the column number i to the lower node processor.

For the rows where a cell processor or an input processor is absent, the node processor 922 successively receives the input data $x_j(\ell)$ or $y_j(\ell)$ [j ∈ [Jℓq, Jℓq + 1, ..., Juq - 1, Juq]] which has been sent from the left node processor 921, stores it in the buffers 952, 955, 978, 980, and 981 for each column, and sends the input data $x_j(\ell)$ or $y_j(\ell)$ with the row number j to the right node processor 923.

For the columns where a cell processor or an input processor is absent, the node processor 922 successively receives the output data $z_j(\ell)$ [j ∈ {Jℓq, Jℓq + 1, ..., Juq - 1, Juq}], stores it in the buffers 970, 973, and 974 for each column, and sends the output data $z_j(\ell)$ along with the column number j to the lower node processor 927.

In the case of the rightmost node processor, namely the node processor where q = Q, the node processor 922 sends the data to the leftmost node processor. In the case of the lowermost node processor, namely the node processor where p = P, the node processor 922 sends the data to the uppermost node processor.

(3) The node processor 922 disposed at the p-th low and at the q-th column selects individual weighting processors in the rectangular area assigned thereto.

(a) In the case where the connection flag = 1:

The node processor 922 computes the changed amount $\Delta W^x_{ij}(n)$ or $\Delta W^y_{ij}(n)$ of the weighting coefficient $W^x_{ij}(n)$ or $W^y_{ij}(n)$ by using the input data $x_j(\ell)$ or $y_j(\ell)$ sent from the left node processor 921 and the output z(n) sent from the upper node processor in accordance with the equation (22) or (25) and updates the weighting coefficient $W^x_{ij}(n)$ or $W^y_{ij}(n)$ in accordance with the equation (23) or (26).

(b) In the case where the connection flag = 0:

The node processor 922 executes no operation.

(H) Determination of learning convergence

In the determination of learning convergence, it is determined whether or not the average value or the maximum value of the changed amount in the weighting coefficient decreases so as to know whether or not the CPN is in stable state. When it is determined that the CPN is in the stable state, the learning process is terminated. On the other hand, when it is determined that the CPN is not in the stable state, the mode is returned back to the above-mentioned process (B). In the process (B), the data is repeatedly input so as to continue the learning process.

The CPN computation processes including the maximum value detection process which are executed by the basic processors in the lattice shaped torus connection have been described. However, such computation processes can be executed by the basic processors in the lattice shaped rectangular planar connection, likewise.

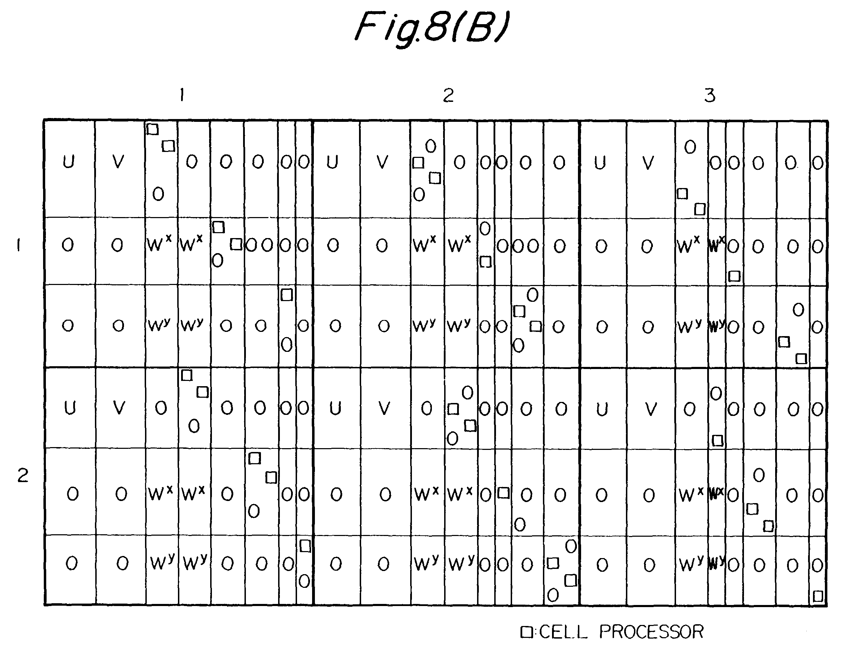

By referring to Fig. 8 (a) and (b), an embodiment of a load balance of CPN model will be described.

Fig. 8 (a) shows the division of the rectangular areas for permuting the rows or the columns of the virtual processors for balancing the load so as to execute the processes of the weighting processors and the cell processors by six node processors of two rows by three columns in parallel.

For each division, by successively permuting the rows and the columns, an array as shown in Fig. 8 (b) can be accomplished. since the product-sum computation of the equations (21), (24), and (27) are not affected by the order of additions at all, even if the rows or the columns are permuted, the same computation result can be obtained.

Fig. 8 (b) shows the division of load for executing a parallel process by six node processors. Since the number of the rows and the number of the columns of the virtual processors cannot be divided by those of the node processors, a load difference for one row or one column takes place. However, the load balance is nearly maintained.

In the above-mentioned embodiment, the maximum value detection process is described. However, for the computations where commutative law is satisfied, it is possible to execute the parallel process by node processors in the lattice shaped torus connection.

In the above-mentioned embodiment, the maximum value detection process for the virtual processors and the node processors in the lattice shaped torus connection is described. However, it is possible to cause the virtual processors and node processors in the lattice shaped rectangular planar connection to execute the maximum value detection process in parallel.

According to the neuro-computer of the present invention, the maximum value of outputs of individual neurons can be obtained in a neuron model having self-learning function without an aid of a teacher. Consequently, the neuron model having self-learning function without an aid of a teacher can be simulated.

Many widely different embodiments of the present invention may be constructed without departing from the spirit and scope of the present invention. It should be understood that the present invention is not limited to the specific embodiments described in the specification, except as defined in the appended claims.

## Claims

1. A neuro-computer for simulating a neuron model having a self-learning function without a teacher and a surpervised learning function, said neuro-computer having a plurality of basic processors disposed at positions which are specified with a plurality of rows and columns, one group of said basic processors being connected with an external device, and the other group of said basic processors being not connected with said external device, said neuro-computer comprising:

a first type of said basic processors corresponding to said other group of said basic processors in said other group being capable of comparing an output value sent from a basic processor located adjacent thereto with an output sent from a different basic processor located adjacent thereof, and capable of sending said compared result as a local maximum or minimum value to another basic processor located adjacent thereto;

a second type of said basic processors corresponding to said other group of said basic processors in said other group being capable of comparing said local maximum or minimum value with an output value sent from a different basic processors located adjacent thereto, and capable of outputting a predetermined value to a different basic processor corresponding to said other group of said basic processors and being located adjacent to other said basic processors corresponding to said other group of said basic processors which output said local maximum or minimum value or said output value in accordance with said compared result; and

means for connecting either said first type of said basic processors or said second type of basic processors with two basic processors located adjacent thereto in the same row thereof and other two basic processors located adjacent thereto in the same column thereof,

**characterized in that**

all of said basic processors belonging to one of the cited processor groups or types are divided into a plurality of rectangular areas respectively, each of said rectangular areas being assigned to at least one of physical processors, and said physical processors being formed in a lattice shape, each of said physical proccessors having all functions of the plurality of said basic processors belonging to one of the cited processor groups or types included in each of said rectangular areas respectively.

2. A neuro-computer according to claim 1, wherein said plurality of basic processors are connected in a lattice shaped torus connection formed in a counter propagation network system.

3. A neuro-computer according to claim 1, wherein said first type of said basic processors include at least one of an input processor, an output processor or an input/output processor, and said second type of said basic processors include at least one of a weighting processor or a cell processor.

4. A neuro-computer acdcording to claim 3, wherein said weighting processor or said cell processor is connected with a different weighting processor or a different cell processor located vertically or horizontally in said lattice shape for transmitting signals, and a rightmost weighting processor is connected with a leftmost weighting processor through said connection means for transmitting signals, respectively.

5. A neuro-computer according to claim 3, wherein a lowermost weighting processor and lowermost cell processor are connected with said input processor, said output processor or said input/output processor through said connection means for transmitting signals.

6. A neuro-computer according to claim 5, wherein said connection means are signal lines, and said input processor, said output processor and said input/output processor are connected with said external device through said signal lines for receiving input data from said external device, respectively.

7. A neuro-computer according to claim 1, wherein said basic processors are virtual processors which include weighting processors, cell processors, input processors, output processors, and input/output processors, and said virtual processors being grouped.

8. A neuro-computer according to claim 7, wherein said grouped virtual processors are disposed in said lattice shape having P portions in a vertical direction and Q portions in a horizontal direction so as to form an array of said physical processors in a lattice shape of said P rows by said Q columns with said P portions and said Q portions satisfying a relation of $P < N + m + n + 1$ and $Q < N + 2m + 2n$, respectively.

9. A neuro-computer according to claim 8, wherein said physical processor is connected with two adjacent physical processors at the same row thereof and also connected with two adjacent processors at the same column thereof in said lattice shape, and said lattice shape being a lattice shaped torus connection.

10. A neuro-computer according to claim 7, wherein said physical processors disposed at rightmost positions are connected with said physical processors disposed at leftmost positions at the same row thereof through signal lines respectively.

11. A neuro-computer according to claim 7, wherein said physical processors disposed at lowermost positions are connected with said physical processors disposed at uppermost positions at tee same column thereof through signal lines respectively.

12. A neuro-computer according to claim 11, wherein said external device is a host computer, and said physical processors disposed at said uppermost positions are also connected with said host computer through signal lines so as to provide I/O functions to said physical processors disposed at said uppermost positions.

13. A neuro-computer according to claim 7, wherein at least one of said physical processors in each column is provided with I/O functions.

14. A neuro-computer according to claim 13, wherein said physical processors provided with said I/O functions are assigned to a computation function and a storage function of at least one of said input processors, said output processors, said input/output processors, said weighting processors or said cell processors included in each of said assigned rectangular areas.

15. A neuro-computer according to claim 14, wherein said real processors other than said physical processors provided with said I/O functions are assigned to said computation function and said storage function for said weighting processors and for said cell processors in said assigned rectangular area.

16. A neuro-computer according to claim 15, wherein said real processors are node processors, and each of said node processors is positioned at an intersection of said lattice.

17. A neuro-computer according to claim 18, wherein said node processors are microprocessors having a high speed product-sum computation function and provided with a data memory capable of storing a weighting coefficient of said weighting processor.

18. A neuro-computer according to claim 17, wherein said data memory is also capable of storing an output value of said cell processor, and intermediate value of a learning process and I/O functions for connecting microprocessors in four directions therefrom.

## Patentansprüche

1. Neurocomputer zum Simulieren eines Neuronenmodells mit Selbstlernfunktion ohne Lehrer sowie mit einer überwachten Lernfunktion, der mehrere Grundprozessoren aufweist, die an Positionen angeordnet sind, die durch mehrere Zeilen und Spalten festgelegt sind, wobei eine Gruppe der Grundprozessoren mit einer externen Vorrichtung verbunden ist und die andere Gruppe der Grundprozessoren nicht mit der externen Vorrichtung verbunden ist, und der folgendes aufweist:

   - einen ersten Typ von Grundprozessoren, die der anderen Gruppe von Grundprozessoren entsprechen, in der anderen Gruppe, der einen von einem benachbart angeordneten Grundprozessor gelieferten Ausgabewert mit einem von einem anderen benachbart angeordneten Grundprozessor gelieferten Ausgabewert vergleichen kann und das Vergleichsergebnis als örtlichen Maximal- oder Minimalwert an einen anderen benachbart angeordneten Grundprozessor liefern kann;
   - einen zweiten Typ von Grundprozessoren, entsprechend der anderen Gruppe von Grundprozessoren, in der anderen Gruppe, der den örtlichen Maximal- oder Minimalwert mit einem von einem anderen benachbart angeordneten Grundprozessor gelieferten Ausgabewert vergleichen kann und einen vorgegebenen Wert an einen anderen Grundprozessor ausgeben kann, der zur anderen Gruppe von Grundprozessoren gehört und benachbart zu einem anderen der Grundprozessoren liegt, die der anderen Gruppe von Grundprozessoren entsprechen, und die den örtlichen Maximal- oder Minimalwert oder den Ausgabewert entsprechend dem Vergleichsergebnis ausgeben; und
   - eine Einrichtung zum Verbinden entweder des ersten Typs von Grundprozessoren oder des zweiten Typs von Grundprozessoren mit zwei Grundprozessoren, die in derselben Zeile benachbart zu ihm liegen, und mit zwei anderen Grundprozessoren, die in derselben Spalte benachbart zu ihm liegen;

   **dadurch gekennzeichnet**, daß alle Grundprozessoren, die zu einer der genannten Prozessorgruppen oder einem der genannten Typen gehören, jeweils in mehrere Rechteckbereiche unterteilt sind, wobei jeder Rechteckbereich mindestens einem realen Prozessor zugeordnet ist, wobei die realen Prozessoren mit Gitterform angeordnet sind und wobei jeder der realen Prozessoren alle Funktionen der mehreren Grundprozessoren aufweist, die zu einer der genannten Prozessorgruppen oder einem der genannten Typen gehören, die jeweils in jedem der Rechteckbereiche enthalten sind.

2. Neurocomputer nach Anspruch 1, bei dem die mehreren Grundprozessoren mit einer gitterförmigen Torusverbindung verbunden sind, die in einem Netzwerksystem mit Ausbreitung in Gegenrichtung ausgebildet ist.

3. Neurocomputer nach Anspruch 1, bei dem der erste Typ von Grundprozessoren mindestens einen Eingabeprozessor, einen Ausgabeprozessor oder einen Eingabe/Ausgabe-Prozessor enthält und der zweite Typ von Grundprozessoren mindestens einen Gewichtungsprozessor oder einen Zellenprozessor enthält.

4. Neurocomputer nach Anspruch 3, bei dem der Gewichtungsprozessor oder der Zellenprozessor mit einem anderen Gewichtungsprozessor oder einem anderen Zellenprozessor verbunden ist, der vertikal oder horizontal in der Gitterform liegt, um Signale zu übertragen, und ein ganz rechts liegender Gewichtungsprozessor jeweils über die Verbindungseinrichtung zum Übertragen von Signalen mit einem ganz links liegenden Gewichtungsprozessor verbunden ist.

**5.** Neurocomputer nach Anspruch 3, bei dem ein unterster Gewichtungsprozessor und ein unterster Zellenprozessor über die Verbindungseinrichtung zum Übertragen von Signalen mit dm Eingabeprozessor, dem Ausgabeprozessor oder dem Eingabe/Ausgabe-Prozessor verbunden sind.

**6.** Neurocomputer nach Anspruch 5, bei dem die Verbindungseinrichtung aus Signalleitungen besteht und der Eingabeprozessor, der Ausgabeprozessor und der Eingabe/Ausgabe-Prozessor jeweils über die Signalleitungen mit der externen Vorrichtung verbunden sind, um Eingabedaten von der externen Vorrichtung zu empfangen.

**7.** Neurocomputer nach Anspruch 1, bei dem die Grundprozessoren virtuelle Prozessoren sind, die Gewichtungsprozessoren, Zellenprozessoren, Eingabeprozessoren, Ausgabeprozessoren und Eingabe/Ausgabe-Prozessoren enthalten, und diese virtuellen Prozessoren gruppiert sind.

**8.** Neurocomputer nach Anspruch 7, bei dem die gruppierten virtuellen Prozessoren gitterförmig mit P Bereichen in vertikaler Richtung und Q Bereichen in horizontaler Richtung angeordnet sind, um ein Array der realen Prozessoren mit einer Gitterform von P Zeilen auf Q Spalten zu bilden, wobei die P Bereiche und die Q Bereiche die Beziehung $P < N + m + n + 1$ bzw. $Q < N + 2m + 2n$ erfüllen.

**9.** Neurocomputer nach Anspruch 8, bei dem der reale Prozessor mit zwei benachbarten realen Prozessoren in derselben Zeile verbunden ist und er auch mit zwei benachbarten Prozessoren in derselben Spalte in der Gitterform verbunden ist, und die Gitterform eine gitterförmige Torusverbindung ist.

**10.** Neurocomputer nach Anspruch 7, bei dem die ganz rechts liegenden realen Prozessoren jeweils über Signalleitungen mit den ganz links liegenden realen Prozessoren in derselben Zeile verbunden sind.

**11.** Neurocomputer nach Anspruch 7, bei dem die ganz unten liegenden realen Prozessoren jeweils über Signalleitungen mit den ganz oben liegenden realen Prozessoren in derselben Zeile verbunden sind.

**12.** Neurocomputer nach Anspruch 11, bei dem die externe Vorrichtung ein Hostcomputer ist und die an den obersten Positionen angeordneten realen Prozessoren ebenfalls über Signalleitungen mit dem Hostcomputer verbunden sind, um den an den obersten Positionen angeordneten realen Prozessoren E/A-Funktionen zu verleihen.

**13.** Neurocomputer nach Anspruch 7, bei dem mindestens einer der realen Prozessoren in jeder Spalte mit E/A-Funktionen versehen ist.

**14.** Neurocomputer nach Anspruch 13, bei dem die mit E/A-Funktion versehenen realen Prozessoren mit einer Berechnungsfunktion und einer Speicherfunktion mindestens eines der Prozessoren unter den Eingabeprozessoren, den Ausgabeprozessoren und den Eingabe/Ausgabe-Prozessoren, den Gewichtungsprozessoren oder den Zellenprozessoren in jedem der zugeordneten Rechteckbereiche versehen sind.

**15.** Neurocomputer nach Anspruch 14, bei dem die realen Prozessoren, die nicht die mit den E/A-Funktionen versehenen realen Prozessoren sind, der Berechnungsfunktion und der Speicherfunktion für die Gewichtungsprozessoren und die Zellenprozessoren im zugeordneten Rechteckbereich zugeordnet sind.

**16.** Neurocomputer nach Anspruch 15, bei dem die realen Prozessoren Knotenprozessoren sind und jeder der Knotenprozessoren an einem Gitterschnittpunkt liegt.

**17.** Neurocomputer nach Anspruch 16, bei dem die Knotenprozessoren Mikroprozessoren mit einer Produkt-Summe-Berechnungsfunktion mit hoher Geschwindigkeit sind und sie mit einem Datenspeicher versehen sind, der einen Gewichtungskoeffizient der Gewichtungsprozessoren speichern kann.

**18.** Neurocomputer nach Anspruch 17, bei dem der Datenspeicher auch einen Ausgabewert des Zellenprozessors und einen Zwischenwert eines Lernprozesses und E/A-Funktionen zum Verbinden von Mikroprozessoren in von ihm ausgehenden vier Richtungen speichern kann.

**Revendications**

**1.** Ordinateur neuronal pour simuler un modèle neuronal comportant une fonction d'auto-apprentissage sans instructeur et une fonction d'apprentissage surveillé, ledit ordinateur neuronal comportant une multiplicité de processeurs de base disposés en des emplacements qui sont spécifiés dans une multiplicité de rangées et de colonnes, un groupe desdits processeurs de base étant relié à un dispositif extérieur, et l'autre groupe desdits processeurs de base n'étant pas relié audit dispositif extérieur, ledit ordinateur neuronal comprenant:

un premier type desdits processeurs de base correspondant audit autre groupe desdits processeurs de base dans ledit autre groupe, étant capable de comparer une valeur de sortie envoyée par un processeur de base situé à côté de lui à une valeur de sortie envoyée par un processeur de base différent situé à côté de lui, et capable d'envoyer ledit résultat de la comparaison, en tant que valeur locale maximale ou minimale, à un autre processeur de base situé à côté de lui;

un second type desdits processeurs de base correspondant audit autre groupe desdits processeurs de base dans ledit autre groupe, étant capable de comparer ladite valeur locale maximale ou minimale à une valeur de sortie envoyée par un processeur de base différent situé à côté de lui, et capable d'envoyer une valeur prédéterminée à un processeur de base différent correspondant audit autre groupe desdits processeurs de base et étant situé à côté d'autres dits processeurs de base correspondant audit autre groupe desdits processeurs de base qui délivrent en sortie ladite valeur locale maximale ou minimale ou ladite valeur de sortie en fonction dudit résultat de la comparaison; et

des moyens pour relier soit ledit premier type desdits processeurs de base soit ledit second type desdits processeurs de base à deux processeurs de base situés à côté de lui et dans la même rangée, et à deux autres processeurs de base situés à côté de lui et dans la même colonne,

caractérisé en ce que

tous lesdits processeurs de base appartenant à l'un des groupes ou types de processeurs sus-mentionnés sont divisés en une multiplicité de zones rectangulaires, respectivement, chacune desdites zones rectangulaires étant affectée à au moins l'un de plusieurs processeurs physiques, et lesdits processeurs physiques étant réalisés sous la forme d'un treillis, chacun desdits processeurs physiques ayant toutes les fonctions de la multiplicité desdits processeurs de base appartenant à l'un des groupes ou types de processeurs sus-mentionnés et contenus dans chacune desdites zones rectangulaires, respectivement.

2. Ordinateur neuronal selon la revendication 1, dans lequel ladite multiplicité de processeurs de base sont reliés suivant une connexion torique en forme de treillis réalisée dans un système de réseau à contre-propagation.

3. Ordinateur neuronal selon la revendication 1, dans lequel ledit premier type desdits processeurs de base comprend au moins l'un des éléments suivants: un processeur d'entrée, un processeur de sortie ou un processeur d'entrée/sortie, et ledit second type desdits processeurs de base comprend au moins l'un des éléments suivants: un processeur de pondération ou un processeur de cellule.

4. Ordinateur neuronal selon la revendication 3, dans lequel ledit processeur de pondération ou ledit processeur de cellule est relié à un processeur de pondération différent ou à un processeur de cellule différent situé verticalement ou horizontalement dans ladite forme en treillis pour transmettre des signaux, et un processeur de pondération situé à l'extrême droite est relié à un processeur de pondération situé à l'extrême gauche par l'intermédiaire desdits moyens de connexion pour transmettre des signaux, respectivement.

5. Ordinateur neuronal selon la revendication 3, dans lequel un processeur de pondération situé le plus en bas et un processeur de cellule situé le plus en bas sont reliés audit processeur d'entrée, audit processeur de sortie ou audit processeur d'entrée/sortie par l'intermédiaire desdits moyens de connexion pour transmettre des signaux.

6. Ordinateur neuronal selon la revendication 5, dans lequel lesdits moyens de connexion sont des lignes de signaux, et ledit processeur d'entrée, ledit processeur de sortie et ledit processeur d'entrée/sortie sont reliés audit dispositif extérieur par l'intermédiaire desdites lignes de signaux pour recevoir des données d'entrée en provenance dudit dispositif extérieur, respectivement.

7. Ordinateur neuronal selon la revendication 1, dans lequel lesdits processeurs de base sont des processeurs virtuels qui comprennent des processeurs de pondération, des processeurs de cellule, des processeurs d'entrée, des processeurs de sortie, et des processeurs d'entrée/sortie, lesdits processeurs virtuels étant groupés.

8. Ordinateur neuronal selon la revendication 7, dans lequel lesdits processeurs virtuels groupés sont disposés dans ladite forme en treillis comportant P parties dans une direction verticale et Q parties dans une direction horizontale de façon à former un réseau desdits processeurs physiques dans une forme en treillis comportant lesdites P rangées par lesdites Q colonnes, lesdites P parties et lesdites Q parties satisfaisant la relation P < N + m + n + 1 et Q < N + 2m + 2n, respectivement.

9.  Ordinateur neuronal selon la revendication 8, dans lequel ledit processeur physique est relié à deux processeurs physiques adjacents de la même rangée que lui et également à deux processeurs adjacents de la même colonne que lui dans ladite forme en treillis, et ladite forme en treillis est une connexion torique en forme de treillis.

10. Ordinateur neuronal selon la revendication 7, dans lequel lesdits processeurs physiques disposés en des emplacements situés le plus à droite sont reliés auxdits processeurs physiques disposés en des emplacements le plus à gauche dans la même rangée qu'eux, par l'intermédiaire de lignes de signaux, respectivement.

11. Ordinateur neuronal selon la revendication 7, dans lequel lesdits processeurs physiques disposés en des emplacements situés le plus en bas sont reliés auxdits processeurs physiques disposés en des emplacements situés le plus en haut dans la même colonne qu'eux par l'intermédiaire de lignes de signaux, respectivement.

12. Ordinateur neuronal selon la revendication 11, dans lequel ledit dispositif extérieur est un ordinateur hôte et lesdits processeurs physiques disposés au niveau desdits emplacements le plus en haut sont également reliés audit ordinateur hôte par l'intermédiaire des lignes de signaux de façon à procurer des fonctions E/S auxdits processeurs physiques situés au niveau desdits emplacements le plus en haut.

13. Ordinateur neuronal selon la revendication 7, dans lequel au moins l'un desdits processeurs physiques de chaque colonne est doté de fonctions E/S.

14. Ordinateur neuronal selon la revendication 13, dans lequel lesdits processeurs physiques dotés desdites fonctions E/S sont affectés à une fonction de calcul et à une fonction d'emmagasinage d'au moins un des éléments suivants: lesdits processeurs d'entrée, lesdits processeurs de sortie, lesdits processeurs d'entrée/sortie, lesdits processeurs de pondération ou lesdits processeurs de cellule contenus dans chacune desdites zones rectangulaires attribuées.

15. Ordinateur neuronal selon la revendication 14, dans lequel lesdits processeurs réels autres que lesdits processeurs physiques dotés desdites fonctions E/S sont affectés à ladite fonction de calcul et à ladite fonction d'emmagasinage pour lesdits processeurs de pondération et pour lesdits processeurs de cellule dans ladite zone rectangulaire attribuée.

16. ordinateur neuronal selon la revendication 15, dans lequel lesdits processeurs réels sont des processeurs de noeud, et chacun desdits processeurs de noeud est placé au niveau d'une intersection dudit treillis.

17. Ordinateur neuronal selon la revendication 16, dans lequel lesdits processeurs de noeud sont des microprocesseurs ayant une fonction de calcul produit-somme très rapide et dotés d'une mémoire de données capable d'emmagasiner un coefficient de pondération dudit processeur de pondération.

18. Ordinateur neuronal selon la revendication 17, dans lequel ladite mémoire de données est également capable d'emmagasiner une valeur de sortie dudit processeur de cellule, une valeur intermédiaire d'un processus d'apprentissage et des fonctions E/S pour relier les microprocesseurs dans quatre directions à partir de là.

Fig.1

| Fig.1A | Fig.1B |

# Fig.1A

☐ : WAIGHTING PROCESSOR     ◻ : CELL PROCESSOR

◩ : INPUT PROCESSOR     ◪ : OUTPUT PROCESSOR

▨ : INPUT/OUTPUT PROCESSOR

# Fig.1B

# Fig.2

# Fig.3

X VECTOR
1ST LAYER

Y' VECTOR
2ND LAYER

3RD LAYER

X' VECTOR
4TH LAYER

Y VECTOR
5TH LAYER

# Fig.4

START

INITIAL VALUE SETTING OF WEIGHTING COEFFICIENT

INPUT DATA SETTING

COMPUTATION PROCESS ON 3RD LAYER

MAXIMUM VALUE DETECTION PROCESS

LEARNING PROCESS ON 3RD LAYER

COMPUTATION PROCESSES 2ND AND 4TH LAYERS

LEARNING PROCESSES ON 2ND AND 4TH LAYERS

DETERMINATION OF LEARNING CONVERGENCE

NO

YES

END

# Fig.5A

Fig.5

| Fig.5A |
| Fig.5B |

# Fig.5B

EP 0 435 208 B1

# *Fig.6A*

☐:WAIGHTING PROCESSOR      ◪:CELL PROCESSOR

☑:INPUT PROCESSOR      ◪:OUTPUT PROCESSOR

▨:INPUT/OUTPUT PROCESSOR

*Fig.6B*

# Fig.7(A)

NP:NODE PROCESSOR

Fig.7(C)

Fig.7(B)

Fig.8(A)

□: CELL PROCESSOR

Fig.8(B)

Fig.9

□ : WEIGHTING PROCESSOR    ◼ : CELL PROCESSOR

EP 0 435 208 B1

# Fig.10